# EUROPÄISCHE PATENTSCHRIFT

(11) **EP 3 150 313 B1**
(45) Veröffentlichungstag und Bekanntmachung des Hinweises auf die Patenterteilung: **11.04.2018**
(21) Anmeldenummer: 15187717.2
(22) Anmeldetag: 30.09.2015
(51) Int. Cl.: B23C 5/10

(54) **VOLLFRÄSWERKZEUG ZUR ROTIERENDEN MATERIALBEARBEITUNG**
SOLID MILLING TOOL FOR MACHINING ROTATING MATERIALS
OUTIL DE FRAISAGE COMPLET POUR L'USINAGE ROTATIF DE MATERIAUX

(43) Veröffentlichungstag der Anmeldung: 05.04.2017
(73) Patentinhaber: Fraisa SA, 4512 Bellach (CH)
(72) Erfinder: MAUSHART, Josef, 4500 Solothurn (CH); TESSMANN, Oliver, 88521 Ertingen (DE); SENN, Stefan, 3296 Arch (CH)
(74) Vertreter: Keller & Partner Patentanwälte AG

(56) Entgegenhaltungen:
- EP-A1- 2 848 342
- EP-A1- 2 913 133
- EP-B1- 1 299 208
- DE-A1- 10 325 600
- DE-U1-202004 015 757
- JP-A- H10 217 024
- JP-A- S60 161 014
- US-A- 5 213 452
- US-A1- 2015 051 863

## Beschreibung

### Technisches Gebiet

Die Erfindung betrifft ein Vollfräswerkzeug zur rotierenden Materialbearbeitung, umfassend einen länglichen Werkzeugschaft, welcher einen Arbeitsbereich aufweist, in welchem mantelseitig mindestens zwei helikale Hauptschneiden mit zugehörigen Haupt-Spanflächen und in Rotationsrichtung vorne anschliessenden Spannuten angeordnet sind, wobei sich die mindestens zwei helikalen Hauptschneiden in eine Stirnseite des Werkzeugschafts fortsetzen und dort mindestens zwei Nebenschneiden mit zugehörigen Neben-Spanflächen bilden, wobei zwischen jeder Neben-Spanfläche und einer Freifläche der in Rotationsrichtung vorangehenden Nebenschneide eine Stirnlücke ausgespart ist. Die Erfindung betrifft weiter ein Verfahren zur Herstellung eines solchen Vollfräswerkzeugs.

### Stand der Technik

Fräswerkzeuge wie beispielsweise Schaftfräser weisen üblicherweise mehrere Zähne auf. Diese verlaufen um einen azimutalen Winkel zueinander versetzt jeweils wendelförmig um eine Längsachse des Fräsers. An jedem Zahn ist eine Schneide mit einer Spanfläche ausgebildet, welche das Spangut von der Schneide weg leitet. An jede Spanfläche schliesst sich unter einem Keilwinkel eine Freifläche an. Diese Freiflächen sind also bezüglich der Drehrichtung hinter den Schneiden angeordnet. Sie weisen gegenüber dem Rohlingkreisumfang, aus dem der Arbeitsbereich des Schaftfräsers herausgearbeitet ist, einen Freiwinkel auf. Das heisst, an den einzelnen Freiflächen sind die Werkzeugschneiden gegenüber dem Rohlingkreisumfang hinterschliffen, damit während der Fräsdrehung (Rotation) und des Fräsvorschubs (Translation) ein Festsetzen des Fräsers in dem Werkstück vermieden wird. Um ein Festsetzen sicher zu verhindern, muss die Freifläche gegenüber der Rohlingumfangsfläche einen gewissen Mindest-Freiwinkel aufweisen.

Um einen Kostenaufwand bei der Erneuerung eines Fräswerkzeugs zu verringern, sind Fräswerkzeuge und andere zur spanenden Bearbeitung von Werkstücken vorgesehene Werkzeuge häufig mit ein oder mehreren auswechselbaren Schneidplatten bestückt, die eine gewisse begrenzte Standzeit haben und von Zeit zu Zeit vergleichsweise einfach und kostengünstig ausgewechselt werden können. Bei einer rotierenden Materialbearbeitung, bei welcher das Werkzeug rotiert wird und das Werkstück feststeht, kommen schneidplattenbesetzte Werkzeuge daher beispielsweise hauptsächlich beim Schruppen bzw. bei vergleichsweise grober räumender Bearbeitung zur Anwendung, bei welcher keine besondere Präzision erforderlich ist. Für eine Präzisions- bzw. Feinbearbeitung von Werkstücken sind Fräswerkzeuge mit Schneidplatten nicht geeignet. Zudem müssen schneidplattenbesetzte Fräswerkzeuge eine gewisse Mindestgrösse bzw. -durchmesser aufweisen, damit die Schneidplatten aufgenommen bzw. gehalten werden können. Mögliche Durchmesser liegen dabei typischerweise oberhalb von ca. 16 mm. Der Einsatzbereich derartiger Werkzeuge ist damit neben der vergleichsweise geringen Präzision auch durch die Grösse der Werkzeuge eingeschränkt.

Für eine Präzisions- bzw. Feinbearbeitung und aufgrund der höheren Leistungsfähigkeit bei Durchmessern bis etwa 25 mm kommen somit Vollfräswerkzeuge zur Anwendung, d. h. Fräswerkzeuge, bei welchen die spanabhebenden Schneiden am Werkzeugkörper selbst ausgebildet sind. Vollfräswerkzeuge können auf allen Grössenskalen z. B. aus Schnellarbeitsstahl (HSS) sowie aus Hartmetall, Keramik oder Cermet sowie aus sämtlichen weiteren bekannten Materialien für Fräswerkzeuge gefertigt sein. Verschlissene Schneiden an Vollfräsern können durch Nachschleifen für den weiteren Gebrauch aufgearbeitet werden. Ist dies nicht mehr möglich, muss das gesamte Werkzeug entsorgt werden. Eine Verlängerung der Standzeit bzw. eine Verbesserung der Verschleisseigenschaften von Vollfräswerkzeugen ist daher besonders wünschenswert.

Vollfräswerkzeuge können unterschiedliche Geometrien aufweisen. Ein Werkzeug, welches sowohl für die Bearbeitung in axialer als auch in radialer Richtung und damit insbesondere auch zur Herstellung von Integralbauteilen geeignet ist, ist der Eckradius-Schaftfräser. Es handelt sich dabei um ein Werkzeug mit einem länglichen Werkzeugschaft, welcher einen Arbeitsbereich aufweist, in welchem Schneiden mit zugehörigen Spanflächen vorhanden sind, wobei jede der Schneiden einen mantelseitigen Hauptschneidenbereich, einen stirnseitigen Nebenschneidenbereich und einen den Hauptschneidenbereich mit dem Nebenschneidenbereich verbindenden Radiusbereich umfasst. Die Geometrie des Eckradius-Schaftfräsers wird so gewählt, dass beim Fräsen sanfte Übergänge im Werkstück erzeugt werden können.

Je nach Bearbeitungsschritt werden unterschiedliche Fräswerkzeuge verwendet. Umfangsfräser sind in der Regel für die Bearbeitung in radialer Richtung, also senkrecht zur Werkzeugachse, optimiert. Diese Bearbeitung findet primär durch das Zusammenwirken der Hauptschneiden mit dem abzutragenden Material statt. Bei den so genannten Stirnfräsern wirken primär die Nebenschneiden auf der (distalen) Stirnseite des Werkzeugs mit dem abzutragenden Material zusammen, die Bearbeitung erfolgt also in axialer Richtung. Sie werden primär zur Herstellung einer flachen Oberfläche auf dem Werkstück eingesetzt.

Zusätzlich gibt es auch Bearbeitungsvorgänge, die - gleichzeitig oder hintereinander - sowohl eine radiale als auch eine axiale Bearbeitung erfolgen. So ist es oft notwendig, mit dem Fräswerkzeug in ein Werkstück "eintauchen" zu können, um anschliessend eine radiale Bearbeitung auszuführen. Wird ein separates Bohrwerkzeug verwendet, kann das Eintauchen nur in axialer Richtung erfolgen. Dies erfordert allerdings nach der Herstellung der entsprechenden Bohrung einen Werkzeugwechsel zu einem Umfangsfräser. Aus diesem Grund erfolgt oft ein Schrägeintauchen in einem gewissen Winkel zur Werkstückoberfläche. Je nach den Platzverhältnissen kann dieses entlang einer geraden Linie oder - häufiger - entlang einer helixförmigen Bahn erfolgen. Weil der mit üblichen Fräswerkzeugen erzielbare Vorschub in axialer Richtung gering ist, bedeutet das Eintauchen oft einen erheblichen Zeitaufwand. Je grösser der zur Werkstückoberfläche erzielbare Eintauchwinkel ist, desto mehr kann dieser Zeitaufwand reduziert werden.

Aus dem Stand der Technik sind einige als Umfangsfräser geeignete Werkzeuge bekannt, die hinsichtlich eines vergrösserten Eintauchwinkels konzipiert wurden.

So betrifft die US 5,213,452 (Technicut Limited) ein Fräswerkzeug, mit welchem sich u. A. Schlitze in Metallen, z. B. Aluminiumlegierungen, herstellen lassen. Das Werkzeug umfasst einen Schaft, welcher sich in einen Werkzeughalter einspannen lässt, mindestens eine Helixschneide, die sich bis zu einer Stirnseite des Werkzeugs erstreckt und auf deren Schneidkante ein Wolframcarbid-Einsatz mit nichtlinearem Schneidprofil aufgelötet ist. Vorzugsweise sind mehrere, z. B. 2-4, Helixschneiden vorhanden. Es sind Eintauchwinkel von bis zu 10° erreichbar, wobei Winkel von 7-10° empfohlen werden. Dazu sind die axialen und radialen Spanwinkel auf der Stirnseite positiv ausgebildet. Das stirnseitige Schneidenprofil umfasst zudem drei Abschnitte mit unterschiedlichem Neigungswinkel zur Rotationsachse.

Die EP 1 299 208 B1 (Berkshire Precision Tools, Talbot Holdings) betrifft Schaftfräser, die verbesserte Eigenschaften beim Schrägeintauchen aufweisen sollen. Ferner soll die Verteilung des Kühlmittels zur Stirn-Schneidkante verbessert werden. Die Stirnschneidkanten des Fräsers verlaufen entlang von Radien und weisen nach innen gerichtete Neigungen auf, wovon die Neigung des äusseren, kürzeren Abschnitts relativ gering ist, die Neigung des inneren, längeren Abschnitts relativ steil; der innere Abschnitt dient u. a. zur Kühlmittelführung zum äusseren Abschnitt. Stirnlücken an der Stirnseite sind derart geformt, dass sich eine positive Schneidgeometrie der Stirnschneiden ergibt. Damit soll sich ein Eintauchwinkel von bis zu 45° erreichen lassen.

Die EP 2 913 133 A1 (Mitsubishi) offenbart einen Eckradius-Schaftfräser mit mehreren Kühlmittelöffnungen im Stirnbereich. Im stirnseitigen Bereich der Spannuten sind Ausnehmungen vorhanden; eine der Stirnschneidkanten ist länger als die anderen, und eine der Kühlmittelöffnungen mündet in die Ausnehmung der längeren Stirnschneidkante zugeordneten Spannut.

Die DE 103 25 600 A1 (Franken GmbH + Co. KG) betrifft einen Schaftfräser gemäß dem Oberbegriff des Anspruchs 1 mit mindestens zwei Stirnschneiden und daran über einen Eckradius angrenzende Umfangsschneiden, welche jeweils um unterschiedliche Teilungswinkel zueinander versetzt angeordnet sind. Jede Umfangsschneide bildet einen negativen Spanwinkel, zwischen den Umfangsschneiden ist jeweils eine Spannut gebildet. Am Übergang zwischen den Spannuten ausserhalb der Nutvertiefungen und den im Bereich der Werkzeugspitze angeordneten Nutvertiefungen ist eine Spanleitstufe gebildet, deren Breite zumindest annähernd der Tiefe der Spannuten im vertiefungsfreien Bereich der Umfangsschneiden entspricht; diese stellt sicher, dass gebildete Späne mit einem engen Biegeradius vom Schaftfräser weggebogen werden. Die DE 103 25 600 A1 offenbart ferner ein Verfahren zur Herstellung eines solchen Vollfräswerkzeugs gemäß dem Oberbegriff des Anspruchs 13. Es hat sich gezeigt, dass auf dem Markt erhältliche Fräswerkzeuge die Anforderungen hinsichtlich Eintauchwinkel und/oder Lebensdauer nur unvollständig erfüllen, insbesondere bei der Bearbeitung von schwierig zu zerspanenden Werkstoffen.

### Darstellung der Erfindung

Aufgabe der Erfindung ist es, ein dem eingangs genannten technischen Gebiet zugehörendes Vollfräswerkzeug zu schaffen, welches bei hoher Lebensdauer verhältnismässig grosse Eintauchwinkel erlaubt, sowie ein Verfahren zur Herstellung eines solchen Vollfräswerkzeugs. Die Lösung der Aufgabe ist durch die Merkmale des Anspruchs 1 bzw. Anspruchs 13 definiert. Gemäss der Erfindung ist zwischen jeweils zwei in Rotationsrichtung aufeinanderfolgenden Nebenschneiden eine Übergangsfläche ausgebildet, welche mindestens an die Neben-Spanfläche der in Rotationsrichtung nachfolgenden Nebenschneide, die Stirnlücke und die Spannut angrenzt.

In der Regel wird die Übergangsfläche zusätzlich auch an die (hinterste) Freifläche der vorangehenden Nebenschneide angrenzen. Die Begriffe "vorangehend" und "vorne" bzw. "nachfolgend" und "hinten" sind in diesem Dokument - soweit nicht anders angegeben (z. B. durch die Angabe "axial hinten", also von der Stirnseite weg, bzw. "axial vorne" also in Richtung der Stirnseite) - jeweils auf die Rotationsrichtung des Fräswerkzeugs bezogen, welche dieses im Rahmen des Fräsvorgangs aufweist.

Späne, die aufgrund des Zusammenwirkens der Nebenschneiden mit dem Werkstück erzeugt werden, gelangen aufgrund des Zusammenspiels der Neben-Spanfläche der entsprechenden Nebenschneide mit der Stirnlücke und der Übergangsfläche in die der Nebenschneide und anschliessend der entsprechenden Hauptschneide vorgeordnete Spannut und werden in dieser axial nach hinten weg befördert.

Stirnlücken sind bei Fräswerkzeugen gängige Ausnehmungen in der Stirnseite, welche der Neben-Spanfläche vorgelagert sind und deren Hauptausdehnung eine radiale Komponente in Richtung der mantelseitigen Spannut aufweist. Sie werden bei der Herstellung entsprechender Vollmaterialfräser in der Regel nach dem Einbringen der Spannuten (und gegegebenenfalls weiteren Profilierung der Hauptschneiden) durch separate Schleifvorgänge in die Stirnseite eingebracht.

Aufgrund der zusätzlichen Übergangsfläche verbessert sich die Abfuhr der stirnseitig erzeugten Späne. Das Werkzeug zeichnet sich durch eine hohe Leistung, hohe Lebensdauer und grosse Universalität aus. Es lässt sich zum Zerspanen von diversen Materialien, darunter Metallen, einsetzen. Es ist zum Schräg- und Helixeintauchen besonders gut geeignet, in seiner Fräsleistung aber mit aktuellen Umfangsfräsern vergleichbar. Ein Einsatzgebiet ist ferner das Mikrofräsen, also die Fräsbearbeitung in kleinen Dimensionen, z. B. zur Herstellung mikromechanischer Bauteile. Gerade für das Mikrofräsen kommen auch Fräswerkzeuge mit Zähnezahl 2 in Frage, bei grösseren Werkzeugen beträgt die Zähnezahl bevorzugt mindestens 3.

Gemäss Versuchen sind in hartem Stahl Eintauchwinkel von bis zu 20° möglich. Sogar in gehärtetem Stahl sind 15° erreichbar. All dies bei guter Standzeit.

Geeignete erfindungsgemässe Fräswerkzeuge lassen sich aus verschiedenen Materialien herstellen, darunter insbesondere Hartmetalle und Schnellarbeitsstahle (HSS). Die Werkzeuge können je nach Grundmaterial und Anwendungsbereich beschichtet sein oder nicht.

Das erfindungsgemässe Werkzeug kann ferner eine innere Kühlmittelzuführung aufweisen. Eine entsprechende Auslassöffnung kann axial im Zentrum der Stirnfläche angeordnet sein. Diese zentrale Kühlmittelzuführung ermöglicht einen prozesssicheren Spanabtransport und begünstigt durch die Kühl-Schmier-Wirkung die Verschleissresistenz des Werkzeugs im Stirn- und Mantelbereich. Die erfindungsgemässe Geometrie ist gerade in Verbindung mit Werkzeugen mit Kühlmittelzuführung von Vorteil, weil sie eine Steigerung der Materialstärke und generell eine höhere Werkzeugstabilität im Stirnbereich ermöglicht, was die Beeinträchtigung aufgrund der Kühlmittelzuführung zumindest teilweise kompensieren kann. Erfindungsgemässe Werkzeuge mit innerer Kühlmittelzuführung können bezüglich Zähnezahl und Durchmesser wie solche ohne ausgeführt werden.

Ein solches Vollfräswerkzeug kann hergestellt werden, indem im Arbeitsbereich mantelseitig mindestens zwei helikale Hauptschneiden mit zugehörigen Haupt-Spanflächen und in Rotationsrichtung vorne anschliessenden Spannuten erzeugt werden, wobei sich die mindestens zwei helikalen Hauptschneiden in eine Stirnseite des Werkzeugschafts fortsetzen und dort mindestens zwei Nebenschneiden mit zugehörigen Neben-Spanflächen bilden. Zwischen jeder Neben-Spanfläche und einer Freifläche der in Rotationsrichtung vorangehenden Nebenschneide wird eine Stirnlücke erzeugt. Nach einem Schleifvorgang zur Erzeugung der Stirnlücken wird ein weiterer Schleifvorgang zur Herstellung einer Übergangsfläche zwischen zwei in Rotationsrichtung aufeinanderfolgenden Nebenschneiden ausgeführt, wobei die Übergangsfläche mindestens an die Neben-Spanfläche der in Rotationsrichtung nachfolgenden Nebenschneide, die Stirnlücke und die Spannut angrenzt.

Der Schleifvorgang zur Erzeugung der Stirnlücken wird in der Regel eine der Zähnezahl entsprechende Anzahl an Schleifvorgängen umfassen. Dasselbe gilt für die Herstellung der Übergangsflächen. Insbesondere wird zur Herstellung der Übergangsflächen ein anderes Schleifwerkzeug verwendet, mit einer anderen Geometrie, als zur Herstellung der Stirnlücken. Die Übergangsfläche wird also durch einen Zusatzeinstich gebildet, eine zusätzlich eingeschliffene Fläche.

Das Schleifen der Zusatzeinstiche erfolgt zweckmässigerweise, nachdem alle Stirnlücken hergestellt wurden. Zwischen dem Schleifen der Stirnlücken und der Zusatzeinstiche können weitere Bearbeitungsvorgänge (Schleifen oder andere) erfolgen. Grundsätzlich ist es natürlich auch möglich, den Zusatzeinstich in Bezug auf eine bestimmte Stirnlücke jeweils unmittelbar nach der Herstellung der Stirnlücke zu schleifen.

Die weiteren, nachfolgend diskutierten geometrischen Merkmale des erfindungsgemässen Vollfräswerkzeugs lassen sich durch übliche Bearbeitungsschritte, insbesondere Schleifvorgänge erzeugen. Dazu werden gängige Schleifvorgänge modifiziert oder zusätzliche Schleifvorgänge ausgeführt.

Erfindungsgemäss ist ein mittlerer Winkel der Übergangsfläche zu einer radialen Ebene, gemessen entlang einer Geodäte zwischen einem axial tiefsten ersten Übergangspunkt zwischen Stirnlücke und Übergangsfläche und einem axial tiefsten zweiten Übergangspunkt zwischen Übergangsfläche und Spannut, grösser als ein erster Winkel der Stirnlücke zur radialen Ebene am ersten Übergangspunkt. Ferner ist der mittlere Winkel der Übergangsfläche kleiner als ein zweiter Winkel der Spannut zur radialen Ebene am zweiten Übergangspunkt.

Als mittlerer Winkel wird hier ein entlang einer Linie (hier der erwähnten Geodäte) gemittelter Winkel verstanden, also das mit der Länge der Linie normierte Integral des Winkelwerts entlang der Linie. Als "axial tiefster Punkt" wird derjenige Punkt der Begrenzungslinie verstanden, dessen axiale Koordinate (also Koordinate in einer Richtung parallel zur Drehachse des Werkzeugs), gemessen ausgehend von der Stirn des Werkzeugs, maximal ist. Die Geodäte ist diejenige auf der Übergangsfläche verlaufende kürzeste Linie, welche die beiden Übergangspunkte verbindet. Es wird sich in der Regel um eine gekrümmte Linie handeln. Eine radiale Ebene ist eine Ebene senkrecht zur Drehachse des Werkzeugs.

Bei der Bestimmung des ersten Winkels und des zweiten Winkels wird dieser zwischen der Radialebene und einer Tangentialebene zur entsprechenden Fläche (Stirnlücke bzw. Spannut) gemessen, welche den ersten bzw. zweiten Übergangspunkt enthält.

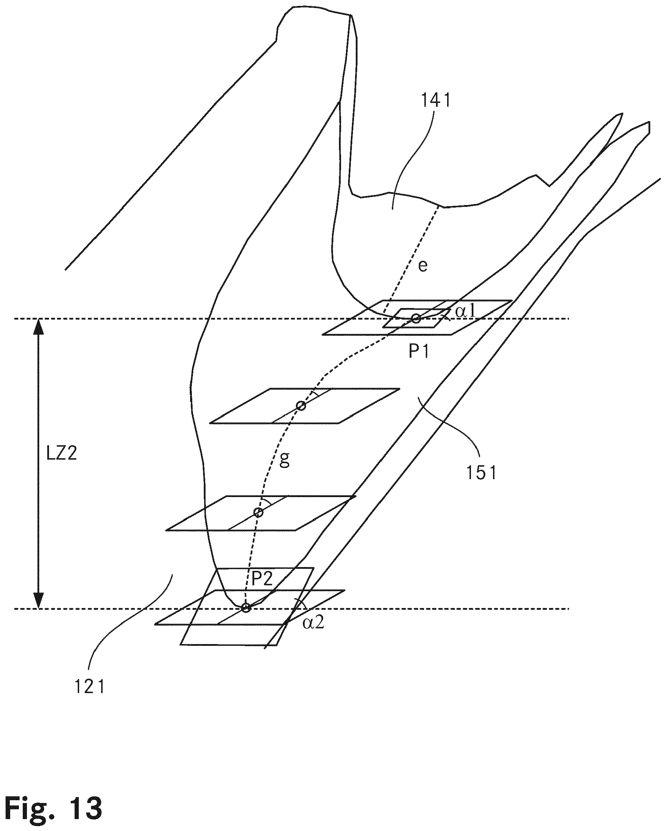

Die geometrischen Zusammenhänge sind weiter unten, im Zusammenhang mit der Figur 13, näher beschrieben.

Bevorzugt beträgt der erste Winkel 5 - 45°, der mittlere Winkel 40 - 70° und der zweite Winkel mindestens 50°. Der zweite Winkel ist dabei primär vom Drallwinkel der jeweiligen Spannut abhängig. Die verhältnismässig wenig geneigte Stirnlücke begünstigt die Aufnahme der stirnseitig erzeugten Späne. Aufgrund der Übergangsfläche werden diese dann trotzdem zuverlässig in die Spannut überführt. Es ergibt sich zudem entlang des Hauptbewegungspfads der Späne eine konvexe Geometrie, die eine höhere Materialstärke zulässt in dem an die Stirnseite angrenzenden Bereich als beispielsweise eine stärker geneigte, weiter nach hinten direkt in die Spannut gezogene Stirnlücke. Entsprechend ermöglicht die erfindungsgemässe Lösung auch eine höhere Standzeit.

In einer bevorzugten Ausführungsform ist der erste Übergangspunkt Teil einer ersten Übergangskante zwischen Stirnlücke und Übergangsfläche.

In der bevorzugten Ausführungsform ist auch der zweite Übergangspunkt Teil einer zweiten Übergangskante zwischen Übergangsfläche und Spannut.

Die Übergangsfläche ist somit in Spanabflussrichtung vorne und hinten durch eine Kante von den angrenzenden Flächen abgegrenzt. Die Kanten ergeben sich dabei aus den Schleifvorgängen zur Herstellung der Übergangsfläche.

Bei einer weiteren bevorzugten Ausführungsform weist die Stirnlücke entlang einer im Wesentlichen parallel zur nachfolgenden Nebenschneide verlaufenden Richtung keine Krümmung auf. Sie ist also beispielsweise trogartig ausgebildet, wobei die Spanabflussrichtung einer im Wesentlichen geraden Linie folgt. Wie vorstehend erwähnt, ermöglicht dies im Zusammenhang mit der erfindungsgemässen Übergangsfläche eine verhältnismässig grosse Materialstärke im stirnseitigen Bereich. Ferner hat sich auch gezeigt, dass eine derartige Geometrie für den Spanabfluss vorteilhaft ist.

Mit Vorteil umfasst die Übergangsfläche eine Sattelfläche. Dies bedeutet, dass die Übergangsfläche überall sattelförmig ist (also in den Hauptrichtungen entgegengesetzt gekrümmt) oder nur in einem Teilbereich. Die konvexe Krümmung erstreckt sich dabei im Wesentlichen in der Spanabflussrichtung, während die konvexe Krümmung senkrecht zur Spanabflussrichtung gegeben ist. Die Konvexität unterstützt die vorgenannten Vorteile bezüglich Materialstärke und sorgt für einen guten Übergang zwischen der Stirnlücke und der Spannut.

Die konkave Form senkrecht dazu entspricht einem Kanal zur Führung der Späne, ähnlich wie anschliessend in der Spannut. Mit Vorteil sind dabei Seitenwände über Radien mit einem Bodenabschnitt verbunden.

Mit Vorteil beträgt ein Krümmungsradius entlang der Geodäte zwischen einem axial tiefsten ersten Übergangspunkt zwischen Stirnlücke und Übergangsfläche und einem axial tiefsten zweiten Übergangspunkt zwischen Übergangsfläche und Spannut in der Mitte der Geodäte maximal 0.2 d 1, wobei d1 den Werkzeugdurchmesser bezeichnet. Eine derartige Krümmung verbessert den Spanabfluss und erhöht die Werkzeugstabilität.

Bevorzugt beträgt eine axiale Distanz zwischen einer Stirnfläche und einem axial tiefsten zweiten Übergangspunkt zwischen Übergangsfläche und Spannut mindestens 0.3 d1, wobei d1 den Werkzeugdurchmesser bezeichnet. Mit Stirnfläche ist dabei eine radiale Ebene gemeint, die den in Richtung Stirnseite vordersten Punkt des Werkzeugs umfasst. Der tief in die Spannut gezogene Übergangsbereich ermöglicht eine zuverlässige Spanabführung von der Stirnseite in die Spannut. Es ist zu beachten, dass aufgrund des (in Umfangsrichtung) unterschiedlichen zur Verfügung stehenden Raums im Bereich der Spannut, die erwähnte axiale Distanz bei grösserer Zähnezahl etwas kleiner zu wählen ist. Bei einer Zähnezahl von 3 oder 4 kann die axiale Distanz 0.4 d1 betragen oder noch grösser sein.

Bevorzugt beträgt eine axiale Distanz zwischen einem axial tiefsten ersten Übergangspunkt zwischen Stirnlücke und Übergangsfläche und einem axial tiefsten zweiten Übergangspunkt zwischen Übergangsfläche und Spannut mindestens 0.2 d 1, wobei d 1 den Werkzeugdurchmesser bezeichnet. Im Unterschied zur Gesamttiefe charakterisiert dieses Mass die "axiale Länge" der Übergangsfläche. Es hat sich gezeigt, dass diese einen gewissen Minimalwert aufweisen muss, wenn eine zuverlässige Spanabführung bei hoher Werkzeug-Lebensdauer erreicht werden soll. Auch hier wird die erwähnte axiale Distanz bei grösserer Zähnezahl etwas kleiner zu wählen sein.

Mit Vorteil weist die Übergangsfläche spanflächenseitig eine Zusatzausnehmung auf. Es ergibt sich daraus eine Verbreiterung, die das spanaufnehmende Volumen im Bereich der Übergangsfläche vergrössert und damit zu einer Verbesserung der Spanabfuhr beiträgt. Die Zusatzausnehmung wird durch einen zusätzlichen Schleifvorgang bzw. ein seitliches Versetzen der Schleifscheibe während der Erzeugung der Übergangsfläche geschaffen. Sie erstreckt sich vorzugsweise nicht über die gesamte axiale Ausdehnung der Übergangsfläche bzw. weist entlang der axialen Richtung eine variable Breite auf.

In der Regel wird die Zusatzausnehmung anhand einer ungefähr in Spanabflussrichtung verlaufenden Kante sichtbar sein.

Mit Vorteil ist ein Übergang der Übergangsfläche in die Spannut zungenförmig ausgebildet, d. h. die entsprechende Begrenzungslinie ist echt konvex geformt und die Übergangsfläche erstreckt sich in einem mittleren Bereich am weitesten in die Spannut. Dadurch ergibt sich eine hindernisfreie Übergabe der Späne in die Spannut.

Andere Geometrien, mit z. B. einem Übergang entlang einer geraden Linie oder entlang einer v-förmigen Linie, sind grundsätzlich ebenfalls möglich.

Bevorzugt beträgt eine maximale Breite der Übergangsfläche senkrecht zu einer Geodäte zwischen einem axial tiefsten ersten Übergangspunkt zwischen Stirnlücke und Übergangsfläche und einem axial tiefsten zweiten Übergangspunkt zwischen Übergangsfläche und Spannut mindestens ein Viertel, insbesondere mindestens ein Drittel, einer Breite der Spannut im Bereich des zweiten Übergangspunktes. Als Breite senkrecht zur Geodäte wird dabei die Ausdehnung entlang einer Senkrechten zur Geodäten in einer Projektion der Übergangsfläche auf eine Tangentialebene im entsprechenden Punkt der Geodäte verstanden.

Bevorzugt entspricht die erwähnte maximale Breite der Übergangsfläche auch ungefähr der Breite der Stirnlücke (oder übertrifft diese), so dass alle in der Stirnlücke geführten Späne in den Bereich der Übergangsfläche gelangen.

Mit Vorteil ist jede der Hauptschneiden mit der entsprechenden Nebenschneide über einen Radiusbereich verbunden, wobei für einen Eckradius r des Radiusbereichs für ein Vollfräswerkzeug mit einem Durchmesser d 1 folgende Beziehung gilt: 0.005 d 1 < r < 0.25 d 1. Ein derartiger Eckradius, auch wenn er kleine Werte von beispielsweise 0.04 d1 oder weniger annimmt, führt zu einer markanten Verbesserung der Standzeit des Werkzeugs, während die Eigenschaften von zwischen der Stirn- und der Mantelseite des Fräswerkzeugs erzeugten Kanten in Bezug auf die meisten Anwendungen nicht massgeblich beeinträchtigt werden.

Alternativ sind im Rahmen der Erfindung auch Fräser mit einem Eckübergang zwischen Mantel und Stirn fertigbar und solche mit grösseren Krümmungsradien.

Mit Vorteil sind die Schneidkanten der Nebenschneiden ausgehend von ihrem radial äusseren Ende in einem Bereich geschärft, welcher sich radial über mindestens 0.25 d1, insbesondere mindestens 0.3 d1, erstreckt, wobei d1 den Werkzeugdurchmesser bezeichnet. Es hat sich gezeigt, dass daraus ein erhöhter Materialabtrag resultiert. Aufgrund des erfindungsgemässen Übergangs von der Stirn in die Spannuten lässt sich dieser Materialabtrag auch zuverlässig weg befördern. Bei tieferer Zähnezahl wird der geschärfte Bereich tendenziell weiter nach innen verlaufen als bei höherer Zähnezahl. In einem zentralen Bereich der Stirnseite sind bei einem erfindungsgemässen Fräswerkzeug mit Vorteil keine Neben-Schneidkanten vorhanden.

Bei einer bevorzugten Ausführungsform weisen die Nebenschneiden einen Hohlschliff auf, der sich ausgehend von ihrem radial äusseren Ende kontinuierlich vergrössert. Als Hohlschliff wird dabei ein ausgehend von der Stirnfläche axial nach hinten gerichteter Verlauf der Nebenschneidkante verstanden, wenn man dieser von aussen nach innen folgt. Der Abstand der Nebenschneidkante von der Stirnfläche nimmt somit von aussen nach innen kontinuierlich zu. Anders gesagt, nimmt ein Winkel zwischen der Nebenschneidkante und einer Radialebene von aussen nach innen ebenfalls kontinuierlich zu.

Innen an die Neben-Schneidkanten schliesst sich ein nicht geschärfter Innenbereich an, in dem sich mit Vorteil mindestens in einem inneren Bereich der entsprechende Winkel wieder kontinuierlich verringert.

Mit Vorteil wird die Schneidkante durch gerade Abschnitte und Übergänge mit (vergleichsweise grossen) Radien gebildet, so dass sich ein sanfter Übergang ergibt. Dies trägt zu reduziertem Verschleiss und einer gleichmässigen Spanbildung bei. Messungen und Versuche zeigen, dass auch die Zerspankräfte sowie Vibrationen reduziert werden.

Das Fräswerkzeug kann eine unterschiedliche Zahnteilung und unterschiedliche Drallwinkel aufweisen. Dadurch lassen sich bekanntermassen Vibrationen stark unterdrücken. In diesem Fall weisen die Stirnlücken und insbesondere die Übergangsflächen entsprechend unterschiedliche Geometrien auf. Bei der Herstellung des erfindungsgemässen Fräswerkzeugs erfolgt deshalb mit Vorteil eine unterschiedliche Programmierung der Schleifvorgänge für die verschiedenen Zähnen zugeordneten Übergangsflächen. Die Berücksichtigung des Drallwinkels ist gerade deshalb wichtig, weil sich die Übergangsfläche - im Gegensatz zu Fräswerkzeugen bekannter Geometrie - in einen axialen Bereich erstreckt, in welchem unterschiedliche Drallwinkel zu unterschiedlichen geometrischen Gegebenheiten führen.

Alternativ kann die Erfindung auch bei Fräsern mit gleichmässiger Zahnteilung und einheitlichem Drallwinkel umgesetzt werden.

Das erfindungsgemässe Fräswerkzeug ist namentlich sowohl zur Bearbeitung von harten Werkstoffen, wie insbesondere gehärtetem Werkzeugstahl (mit Härten von z. B. 42-60 HRC) geeignet, als auch zur Bearbeitung von vergleichsweise weicheren Werkstoffen wie Stahl (mit Zugfestigkeiten von bis zu 1300 N/mm²), nichtrostender Stahl (Cr-Ni), Gusseisen, Reinkupfer, Titanlegierungen oder hitzebeständiger Stahl. Um den verschiedenen Anforderungen gerecht zu werden, können insbesondere folgende Eigenschaften bei Werkzeugen für die beiden Werkstoffgruppen unterschiedlich gewählt werden:
a. Hohlschliff
   Es hat sich herausgestellt, dass bei einem Fräser für die vergleichsweise weicheren Werkstoffe ein stärkerer Hohlschliff angezeigt ist als bei einem für die harten Werkstoffe, d. h. bei ersterem fällt die Nebenschneide ausgehend von ihrem radial äusseren Ende schneller und stärker von der Stirnfläche axial nach hinten zurück. Die entsprechenden Winkel zur Stirnfläche sind grösser und/oder die Übergangspunkte zwischen nachfolgenden Abschnitten sind radial weiter aussen angeordnet.
b. Zahnanschliff
   Es hat sich herausgestellt, dass bei einem Fräser für die vergleichsweise weicheren Werkstoffe ein ausgeprägter Zahnanschliff vorteilhaft ist. Dies bedeutet, dass die Nebenschneide an ihrem radial äusseren Ende zusätzlich angeschliffen ist, vorzugsweise mit einem stark negativen Rückspanwinkel, dessen Betrag mindestens 15° ist, bevorzugt mindestens 20°. Als Rückspanwinkel wird in diesem Zusammenhang ein in einer Radialebene gemessener Winkel zwischen der im Bereich des Zahnanschliffs gebildeten Schneidkante und einer Radiallinie verstanden.
   Mit Vorteil erstreckt sich dieser ausgeprägte Zahnanschliff weit nach innen: Eine radiale Komponente des Zahnanschliffs beträgt bevorzugt mindestens 0.15 d 1, insbesondere mindestens 0.20 d1.

Der erfindungsgemässe Übergang zwischen Stirnseite und mantelseitiger Spannut ermöglicht jeweils einen reibungslosen Abtransport der mit einer entsprechenden Nebenschneidengeometrie bei hohem Eintauchwinkel erzeugten Späne.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Schrägbild einer ersten Ausführungsform eines erfindungsgemässen Fräswerkzeugs;
- Fig. 2: eine Seitenansicht der ersten Ausführungsform;
- Fig. 3: eine Frontansicht der ersten Ausführungsform;
- Fig. 4: eine vergrösserte Seitenansicht der ersten Ausführungsform;
- Fig. 5: eine Detailansicht eines vorderen Endes einer Spannut der ersten Ausführungsform;
- Fig. 6: eine Detailansicht der Stirnlücke und der Übergangsfläche der ersten Ausführungsform;
- Fig. 7: eine Detailansicht einer Nebenschneidkante der ersten Ausführungsform;
- Fig. 8: eine Frontansicht einer zweiten Ausführungsform eines erfindungsgemässen Fräswerkzeugs;
- Fig. 9: eine Seitenansicht des stirnseitigen Abschnitts der zweiten Ausführungsform;
- Fig. 10: eine Detailansicht eines vorderen Endes einer Spannut der zweiten Ausführungsform;
- Fig. 11: eine Detailansicht der Stirnlücke und Übergangsfläche der zweiten Ausführungsform;
- Fig. 12: eine Detailansicht einer Nebenschneidkante der zweiten Ausführungsform;
- Fig. 13: und eine schematische Seitenansicht einer Stirnlücke und dazugehörigen Übergangsfläche.

Grundsätzlich sind in den Figuren gleiche Teile mit gleichen Bezugszeichen versehen.

### Wege zur Ausführung der Erfindung

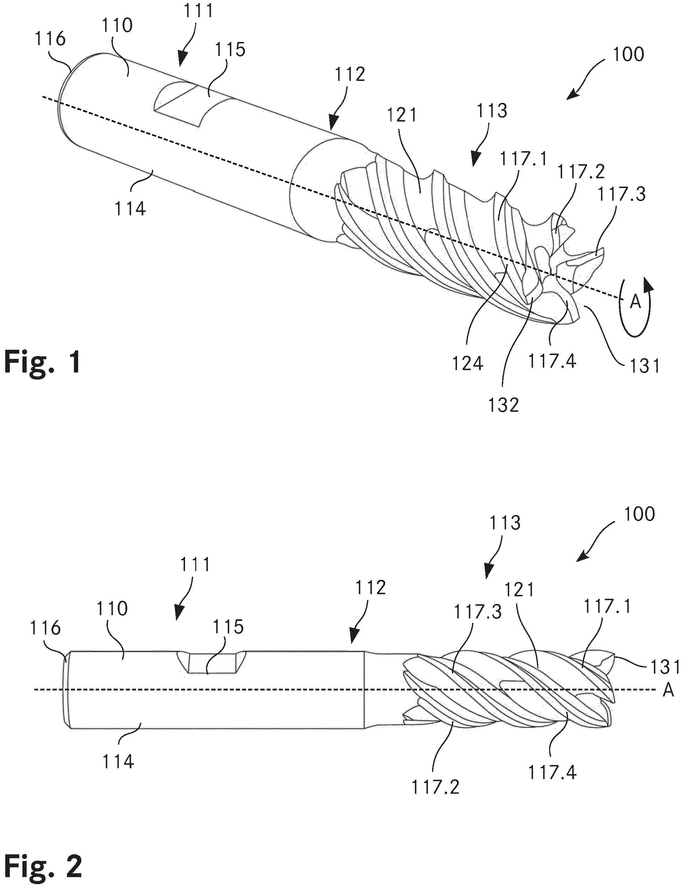

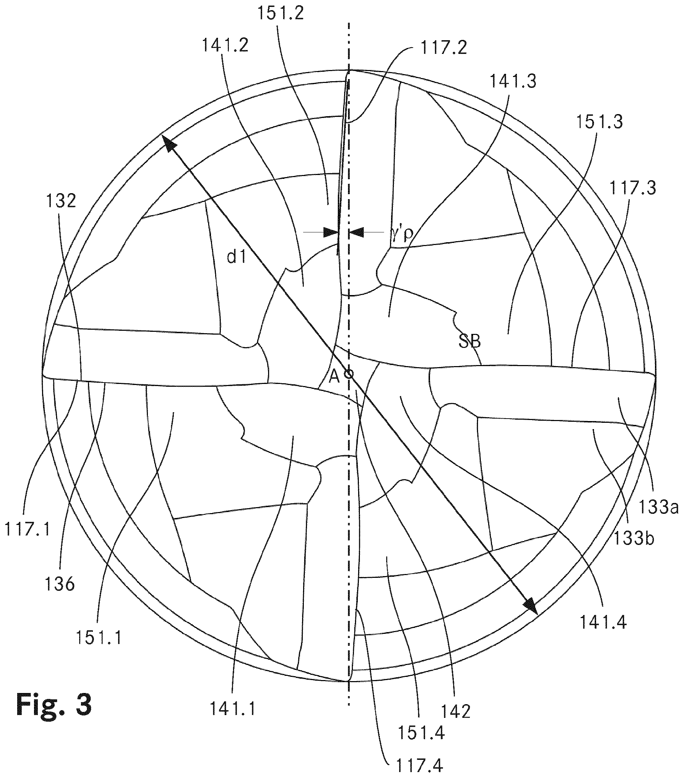

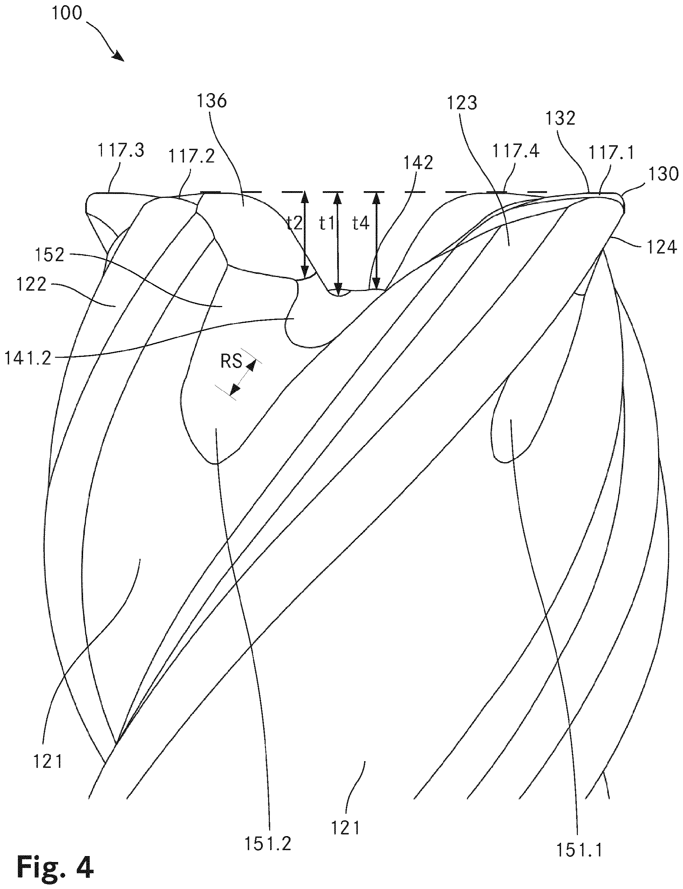

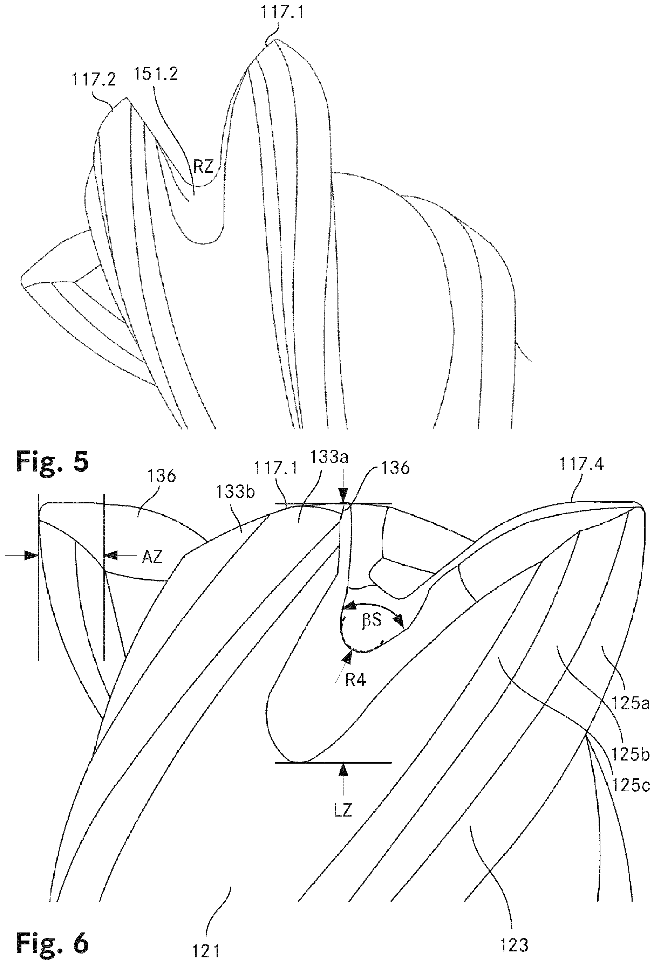

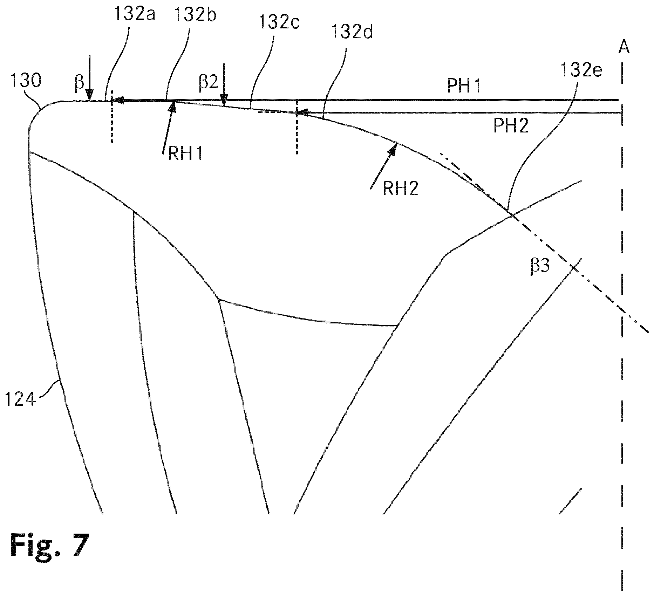

Die Figuren 1 - 7 betreffen eine erste Ausführungsform eines erfindungsgemässen Fräswerkzeugs. Die Figur 1 zeigt ein Schrägbild des Werkzeugs, die Figur 2 eine Seitenansicht, die Figur 3 eine Frontansicht. Die Figur 4 ist eine vergrösserte Seitenansicht, aus welcher insbesondere die Tiefen der stirnseitigen Ausnehmungen ersichtlich sind. Die Figur 5 zeigt eine Detailansicht eines vorderen Endes einer Spannut, die Figur 6 eine Detailansicht der Stirnlücke und der Übergangsfläche. Die Figur 7 ist eine Detailansicht einer Nebenschneidkante des Fräswerkzeugs gemäss der ersten Ausführungsform. Der Schaftfräser 100, gemäss der ersten Ausführungsform, ist besonders für die Bearbeitung vergüteter und harter Materialien wie gehärtetem Werkzeugstahl (mit Härten von z. B. 42-60 HRC) sowie Guss und Titanlegierungen geeignet.

Der Schaftfräser 100 ist einstückig aus Hartmetall gefertigt. Er weist einen im Wesentlichen kreiszylindrischen Grundkörper 110 mit einer Längsachse A auf. Der Nominaldurchmesser d1 des beispielhaft in den Figuren 1 - 7 gezeigten Grundkörpers 110 beträgt 8.0 mm (vgl. Figur 3). Der Grundkörper 110 ist dabei in seiner Längsrichtung in einen Haltebereich 111, einen Übergangsbereich 112 und einen Arbeitsbereich 113 gegliedert. Der Haltebereich 111 ist als kreiszylindrischer Schaft 114 ausgebildet, welcher beispielsweise in einem entsprechenden Futter einer Fräsmaschine aufgenommen und gehalten werden kann. Eine sekantenartige Abflachung 115 im Mantel des Haltebereichs 111 wirkt mit einer futterseitigen Verdrehsicherung zusammen. Zum vereinfachten Einbringen in ein Spannmittel weist der Schaft 114 am haltebereichsseitigen (proximalen) Längsende des Grundkörpers 110 eine Abfassung 116 auf.

Distal an den Haltebereich 111 schliesst sich der Übergangsbereich 112 an, welcher durch den distalen Teil des kreiszylindrischen Schafts 114 gebildet wird. Der Übergangsbereich 112 unterscheidet sich vom Haltebereich 111 insofern, als er sich bei eingespanntem Werkzeug ausserhalb des Futters der Fräsmaschine befindet. An den Übergangsbereich 112 schliesst sich wiederum distal der Arbeitsbereich 113 an. Der Arbeitsbereich 113 ist in an sich bekannter Weise mit einer Hartstoffbeschichtung versehen. Im Arbeitsbereich 113 sind vier helikal verlaufende Schneidzähne 117.1, 117.2, 117.3, 117.4 ausgebildet. Die Schneidenlänge beträgt beim dargestellten Werkzeug axial von der Stirnseite her gemessen 19 mm.

Die Drallwinkel der einzelnen Schneidzähne 117.1...4 sind unterschiedlich und betragen 43.5°, 42.5°, 43.5° bzw. 44.5°. Auch die Zahnteilung ist ungleich, die entsprechenden Winkel betragen 0° für den ersten Schneidzahn 117.1,89.5°, für den zweiten Schneidzahn 117.2, 180°, für den dritten Schneidzahn 117.3 und 270.5° für den vierten Schneidzahn 117.4.

Im Folgenden wird exemplarisch der Schneidzahn 117.1 beschrieben, wobei sich von diesem die weiteren Schneidzähne 117.2...4 durch deren azimutal versetzte Anordnung am Schaftfräser 100, durch die unterschiedlichen Drallwinkel und eine der Zahnteilung und dem Drallwinkel angepasste Freiflächen- sowie Spannutgestaltung unterscheiden. In Drehrichtung des Schaftfräsers 100 ist vor dem Schneidzahn 117.1 eine Spannut 121 ausgestaltet. Eine Innenwandung der Spannut 121 umfasst dabei eine Haupt-Spanfläche 122 des Schneidzahns 117.1 sowie eine Rückseite 123 des anderen Schneidzahns 117.4 (vgl. z. B. Figur 6).

Eine radial am weitesten von der Längsachse A entfernte wendelförmige Kante am Schneidzahn 117.1 bildet eine Hauptschneide 124 des Schaftfräsers 100. Bezüglich der Drehrichtung hinter der Hauptschneide 124 sind aneinander anschliessend drei Freiflächen 125a, 125b, 125c ausgebildet. Ein Freiwinkel der ersten, der Hauptschneide 124 benachbarten Freifläche 125a beträgt 6°. Die Breite der Freiflächen 125a...c nimmt ausgehend von der Stirnseite des Schaftfräsers 100 ab. Die Abnahme der Breite ist bei der mittleren Freifläche 125b derart, dass sie ungefähr bei zwei Dritteln der Schneidenlänge wegfällt und nur noch die zwei äusseren Freiflächen 125a, 125c auf die Hauptschneide 124 folgen.

An einem arbeitsbereichseitigen (distalen) Längsende 131 des Schaftfräsers 100 ist stirnseitig, an die Hauptschneide 124 anschliessend, eine Nebenschneide 132 mit einer Neben-Spanfläche 136 ausgebildet. Die Hauptschneide 124 und die Nebenschneide 132 sind über einen Radiusübergang 130 miteinander verbunden, wobei die Schneiden derart ausgebildet sind, dass eine vom Mantelbereich über den Radius bis in die Stirnseite durchgängige, stufenlose Schneide gebildet wird. Der Krümmungsradius rε im Bereich des Radiusübergangs 130 beträgt im dargestellten Beispiel 0.15 mm.

Auch die Nebenschneide 132 weist hinter der eigentlichen Schneidkante zwei Freiflächen 133a, 133b auf. Ihre Freiwinkel α'o1 bzw. α'o2 betragen 6° bzw. 16°. Eine axiale Ausdehnung des Zahnanschliffs Za der Nebenschneiden 132 beträgt 0.20 mm. Der Zahnanschliff deckt somit insbesondere den Radiusbereich ab.

Der Verlauf des Hohlschliffs der Nebenschneide 132 ist aus der Figur 7 ersichtlich. Ausgehend vom Radiusbereich 130, welcher den radial äussersten Abschnitt der Schneide bildet, erstreckt sich die Nebenschneide 132 zunächst in einem exakt in einer Radialebene verlaufenden erstem Abschnitt 132a (Hohlschliff β=0°) nach innen, bis zu einem radialen Abstand von der Achse A (PH1) von 3.52 mm. Über einen gekrümmten Übergangsbereich 132b mit einem Radius RH1 von 2.0 mm schliesst sich ein zweiter Abschnitt 132c an. Dieser weist einen Hohlschliff von β2=3° auf und erstreckt sich innen bis zu einem radialen Abstand PH2 von der Achse A von 2.42 mm. Über einen weiteren gekrümmten Übergangsbereich 132d mit einem Radius RH2 von 2.0 mm schliesst sich dann ein dritter Abschnitt 132e mit einem Hohlschliff von β3=40° an. Dieser erstreckt sich nach innen bis zum Ende des geschärften Abschnitts der Nebenschneide 132. Dieser weist in axialer Richtung eine Tiefe t2 von 1.1 mm hinter der Stirnfläche auf (vgl. Figur 4).

Die Nebenschneidkante weist einen Rückspanwinkel γ'ρ von -4° auf (siehe Figur 3), der Spanwinkel γ'o beträgt 8°.

Wie aus der Figur 3 gut ersichtlich ist, weist die Stirnseite zwischen jeweils zwei in Rotationsrichtung benachbarten Nebenschneiden 132 der Schneidzähne 117.1...4 jeweils eine Stirnlücke 141.1, 141.2, 141.3, 141.4 auf. Jede der Stirnlücken 141.1...4 ist muldenförmig ausgebildet, mit einem Öffnungswinkel βS von 55° und einem Stirnlückenradius R4 von 0.4 mm (vgl. Figur 6). Ein hinteres, radial inneres Ende der Mulde stellt eine Fortsetzung eines der Schneidzähne 117.4 dar. Die Mulde erstreckt sich dann mit ihrer Längsrichtung quer zu diesem hinteren Ende radial nach aussen und schliesst mit ihrer in Rotationsrichtung hinteren Seite zunächst an eine zentrale Erhebung 142, dann an die Neben-Spanfläche 136 des in Rotationsrichtung nachfolgenden Schneidzahns 117.1 an. Der tiefste Punkt der Stirnlücke 141.1...4 in einer axialen Ebene, welche die äusseren Enden der Nebenschneiden 132 umfasst, liegt in einer Tiefe t1 von 1.3 mm hinter der Stirnfläche. Die entsprechende Tiefe t4 der zentralen Erhebung 142, entlang der Achse A, beträgt 1.21 mm (vgl. Figur 4).

Die Längsachse der Stirnlücke 141.1...4, entsprechend dem Muldengrund, ist gegenüber einer Radialebene um einen Winkel ψ=22° geneigt, so dass die Mulde ausgehend vom Zentrum des Fräswerkzeugs nach aussen schräg von der Stirnseite weg verläuft. Der Abstand SB der radial äusseren Begrenzungen der zwei einander gegenüberliegenden Stirnlücken 141.1, 141.3 bzw. 141.2, 141.4 beträgt 2.1 mm. Die beiden Stirnlücken 141.1...4 und die zentrale Erhebung 142 nehmen somit gut einen Viertel des Werkzeugdurchmessers ein, die beidseitig radial aussen anschliessenden Nebenschneiden 132 die restlichen knapp drei Viertel.

In der Verlängerung der Stirnlücken 141.1...4 liegen Übergangsflächen 151.1...151.4. Diese weisen einen Radius RZ von 0.6 mm auf (vgl. Figur 5), sind also etwas offener als die Stirnlücken 141.1...4. Die Übergangsflächen 151.1...4 sind muldenförmig, ähnlich wie die Stirnlücken 141.1...4, der Boden der Mulde erstreckt sich aber entlang einer konvexen Linie. Der entsprechende Krümmungsradius RS beträgt 0.8 mm (vgl. Figur 4). Die axiale Tiefe LZ des axial hinteren Endes der Übergangsflächen 151.1...4 beträgt 3.5 mm; in einer durch die Neben-Spanfläche 136 eines Schneidzahns 117.1...4 liegenden Ebene beträgt der radiale Abstand AZ der entsprechenden Übergangsfläche 151.1...4 vom Werkzeugmantel 1.0 mm (vgl. Figur 6). Die Übergangsflächen 151.1...4 weisen in Richtung der Haupt-Spanfläche 122 eine Verbreiterung 152 auf, die während der Herstellung des Fräswerkzeugs mittels eines seitlichen Versatzes der verwendeten Schleifscheibe hergestellt wurde. Die Übergangsflächen 151.1...4 laufen in axialer Richtung hinten zungenförmig in die Spannut aus.

Mit einer sehr ähnlichen Stirngeometrie lassen sich vierschneidige Schaftfräser mit anderem Nominaldurchmesser d1 fertigen. Als Beispiel sind in der nachfolgenden Tabelle die entsprechenden Parameter für die Durchmesser 4.0, 6.0, 12.0 und 20.0 mm aufgeführt (Längenangaben jeweils in mm):

| **Mass** | **Sym.** | **4.0** | **6.0** | **12.0** | **20.0** |
|---|---|---|---|---|---|
| **Durchmesser** | **d1** | | | | |
| Stirnlücke | βS | 55° | | | |
| Stirnlücke Winkel | y | 22° | | | |
| Stirnlücke Radius | R4 | 0.2 | 0.3 | 0.6 | 1.0 |
| Stirnlücke Tiefe | t1 | 0.65 | 0.97 | 1.95 | 3.25 |
| Stirnlücke Breite | SB | 1.15 | 1.35 | 3.15 | 5.25 |
| Zentrumstiefe | t4 | 0.58 | 0.90 | 1.82 | 3.05 |
| Tiefe Übergangsfläche | LZ | 1.9 | 2.7 | 5.05 | 8 |
| Abstand Übergangsfläche | AZ | 0.5 | 0.75 | 1.5 | 2.5 |
| Radius Übergangsfläche | RZ | 0.25 | 0.45 | 0.8 | 1.5 |
| Krümmungsradius | RS | 0.4 | 0.6 | 1.2 | 2.0 |
| Eckradius | rε | 0.1 | 0.1 | 0.2 | 0.2 |
| Hohlschliff 1 | β | 0° | | | |
| Position 1 Hohlschliff | PH1 | 1.76 | 2.64 | 5.28 | 8.8 |
| Radius 1 Hohlschliff | RH1 | 1.0 | 1.5 | 3.0 | 5.0 |
| Hohlschliff 2 | β2 | 3° | | | |
| Position 2 Hohlschliff | PH2 | 1.21 | 1.81 | 3.62 | 6.04 |
| Radius 2 Hohlschliff | RH2 | 1.0 | 1.5 | 3.0 | 5.0 |
| Hohlschliff 3 | β3 | 40° | | | |
| Freiwinkel 1 Nebenschneide | α'o1 | 6° | | | |
| Freiwinkel 2 Nebenschneide | α'o2 | 16° | | | |
| Zahnanschliff | Za | 0.15 | 0.15 | 0.25 | 0.25 |
| Spanwinkel Nebenschneide | γ'o | 8° | | | |
| Rückspanwinkel Nebenschneide | γ'ρ | -4° | | | |
| Schärftiefe | t2 | 0.52 | 0.82 | 1.69 | 2.86 |

Die Geometrie lässt sich auch auf andere Zähnezahlen, insbesondere Z=2, Z=3 und Z>4, übertragen, wobei generell Strukturen, die sich in Umfangsrichtung erstrecken, mit wachsender Zähnezahl kleiner zu dimensionieren sind.

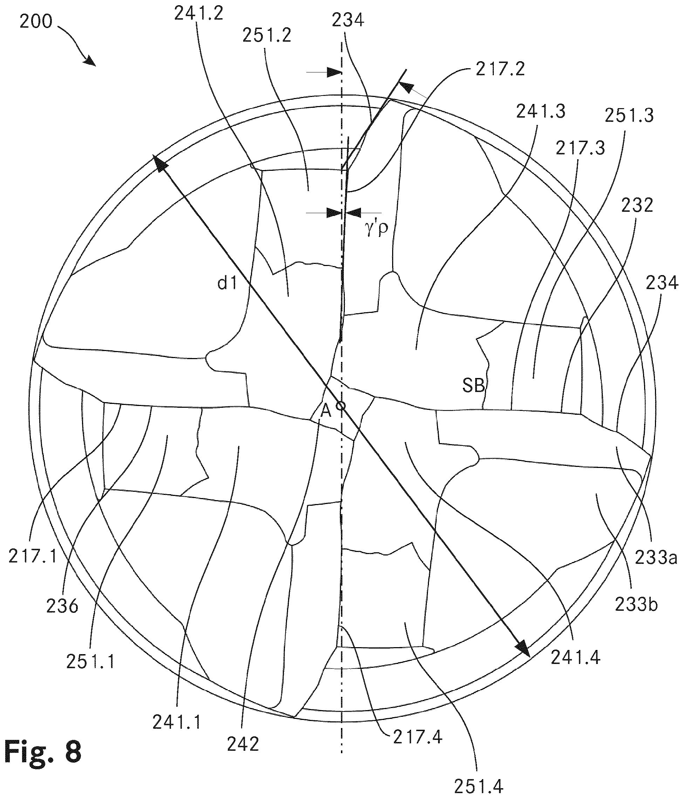

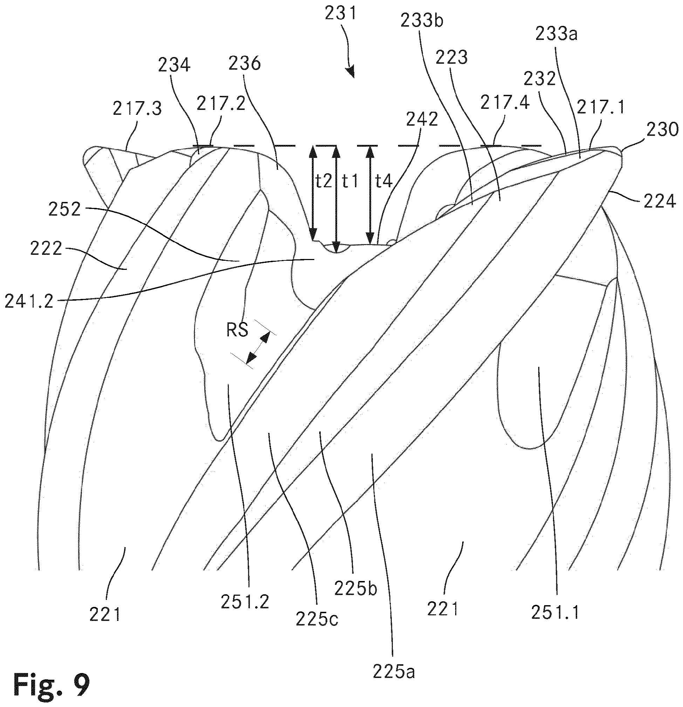

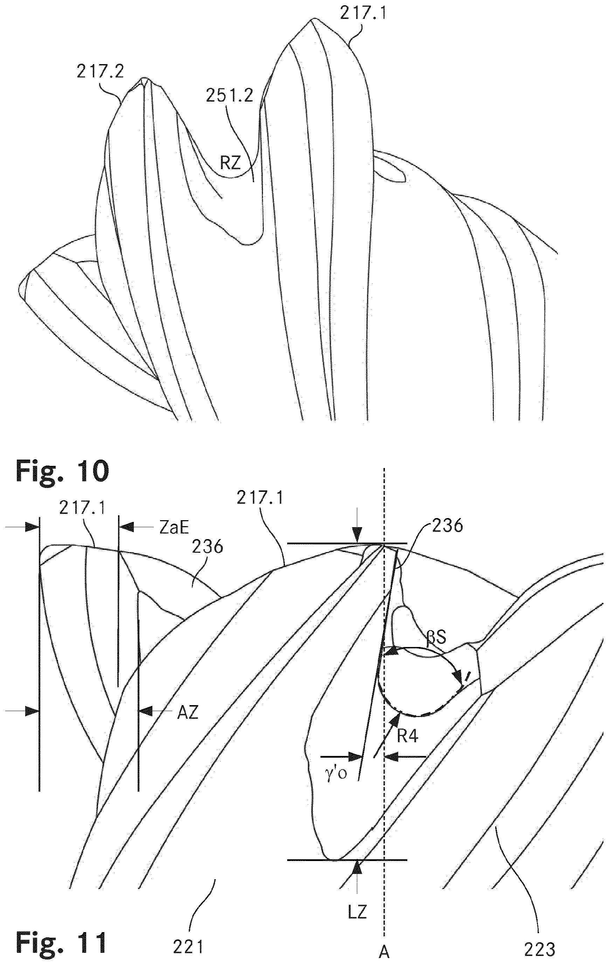

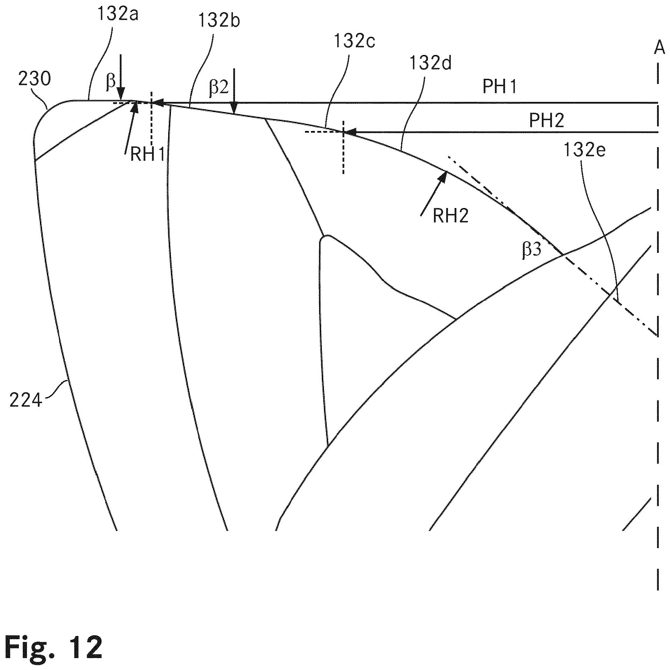

Die Figuren 8 - 12 betreffen eine zweite Ausführungsform eines erfindungsgemässen Fräswerkzeugs. Die Figur 8 zeigt eine Frontansicht des Werkzeugs. Die Figur 9 ist eine vergrösserte Seitenansicht, aus welcher insbesondere die Tiefen der stirnseitigen Ausnehmungen ersichtlich sind. Die Figur 10 zeigt eine Detailansicht eines vorderen Endes einer Spannut, die Figur 11 eine Detailansicht der Stirnlücke und der Übergangsfläche. Die Figur 12 ist eine Detailansicht einer Nebenschneidkante des Fräswerkzeugs gemäss der zweiten Ausführungsform. Der Schaftfräser 200 gemäss der ersten Ausführungsform ist besonders für die Bearbeitung von Materialien wie Stahl (mit Zugfestigkeiten von bis zu 1300 N/mm²), nichtrostender Stahl, Gusseisen, Reinkupfer, Titanlegierungen und hitzebeständigem sowie hochwarmfester Stahl geeignet.

Der grundsätzliche Aufbau des Schaftfräsers 200 entspricht demjenigen gemäss der ersten Ausführungsform, wie er im Zusammenhang mit den Figuren 1 und 2 beschrieben ist. Auch der Schaftfräser 200 ist einstückig aus Hartmetall gefertigt und weist einen im Wesentlichen kreiszylindrischen Grundkörper mit einer Längsachse A auf. Der Nominaldurchmesser d1 des beispielhaft in den Figuren 8 - 12 gezeigten Grundkörpers beträgt wiederum 8.0 mm (vgl. Figur 8).

In einem distalen Arbeitsbereich des Schaftfräsers 200 sind vier helikal verlaufende Schneidzähne 217.1, 217.2, 217.3, 217.4 ausgebildet. Die Schneidenlänge beträgt beim dargestellten Werkzeug axial von der Stirnseite her gemessen 19 mm.

Die Drallwinkel der einzelnen Schneidzähne 217.1...4 sind unterschiedlich und betragen 43.5°, 42.5°, 43.5° bzw. 44.5°. Auch die Zahnteilung ist ungleich, die entsprechenden Winkel betragen 0° für den ersten Schneidzahn 217.1, 89.5° für den zweiten Schneidzahn 217.2, 180° für den dritten Schneidzahn 217.3 und 270.5° für den vierten Schneidzahn 217.4.

Im Folgenden wird exemplarisch der Schneidzahn 217.1 beschrieben, wobei sich von diesem die weiteren Schneidzähne 217.2...4 durch deren azimutal versetzte Anordnung am Schaftfräser 200, durch die unterschiedlichen Drallwinkel und eine der Zahnteilung und dem Drallwinkel angepasste Freiflächen- sowie Spannutgestaltung unterscheiden. In Drehrichtung des Schaftfräsers 200 ist vor dem Schneidzahn 217.1 eine Spannut 221 ausgestaltet. Eine Innenwandung der Spannut 221 umfasst dabei eine Haupt-Spanfläche 222 des Schneidzahns 217.1 sowie eine Rückseite 223 des anderen Schneidzahns 217.4 (vgl. z. B. Figur 11).

Eine radial am weitesten von der Längsachse A entfernte wendelförmige Kante am Schneidzahn 217.1 bildet eine Hauptschneide 224 des Schaftfräsers 200. Bezüglich der Drehrichtung hinter der Hauptschneide 224 sind aneinander anschliessend drei Freiflächen 225a, 225b, 225c ausgebildet. Ein Freiwinkel der ersten, der Hauptschneide 224 benachbarten Freifläche 225a beträgt 6°. Die Breite der Freiflächen 225a...c bleibt entlang des jeweiligen Schneidzahns 217.1...4 ungefähr konstant.

An einem arbeitsbereichseitigen (distalen) Längsende 231 des Schaftfräsers 200 ist stirnseitig, an die Hauptschneide 224 anschliessend, eine Nebenschneide 232 ausgebildet, wobei die Haupt-Spanfläche 222 bereichsweise auch als Spanfläche der Nebenschneide 232 wirkt. Die Hauptschneide 224 und die Nebenschneide 232 sind über einen Radiusübergang 230 miteinander verbunden, wobei die Schneiden derart ausgebildet sind, dass eine vom Mantelbereich über den Radius bis in die Stirnseite durchgängige, stufenlose Schneide gebildet wird. Der Krümmungsradius rε im Bereich des Radiusübergangs 230 beträgt im dargestellten Beispiel 0.15 mm.

Auch die Nebenschneide 232 weist hinter der eigentlichen Schneidkante zwei Freiflächen 233a, 233b auf. Ihre Freiwinkel α'o1 bzw. α'o2 betragen 6° bzw. 16°. Die Nebenschneiden 232 weisen in einem äusseren Bereich einen Zahnanschliff 234 auf, welcher sich in axialer Richtung über Za=0.2 mm erstreckt und insbesondere den Radiusbereich abdeckt. Die radiale Komponente des Zahnanschliffs 234 beträgt 1.96 mm.

In einem inneren Bereich ist durch einen weiteren Anschliff eine Neben-Spanfläche 236 gebildet. Ihr radial äusseres Ende befindet sich bei ZaE=0.92 mm. Zwischen dem Zahnanschliff 234 und der Neben-Spanfläche 236 grenzt die Schneidkante der Nebenschneide 232 direkt an die Haupt-Spanfläche 222 bzw. die Spannut 221 an. Diese Geometrie ergibt sich aufgrund der Nutform und des Spanwinkels der Hauptschneide, letzterer beträgt beim dargestellten Ausführungsbeispiel 0°.

Der Verlauf des Hohlschliffs der Nebenschneide 232 ist aus der Figur 12 ersichtlich. Ausgehend vom Radiusbereich 230, welcher den radial äussersten Abschnitt der Schneide bildet, erstreckt sich die Nebenschneide 232 zunächst in einem exakt in einer Radialebene verlaufenden erstem Abschnitt 232a (Hohlschliff β=0°) nach innen, bis zu einem radialen Abstand von der Achse A (PH1) von 3.52 mm. Über einen gekrümmten Übergangsbereich 232b mit einem Radius RH1 von 2.0 mm schliesst sich ein zweiter Abschnitt 232c an. Dieser weist einen Hohlschliff von β2=10° auf und erstreckt sich innen bis zu einem radialen Abstand PH2 von der Achse A von 2.11 mm. Über einen weiteren gekrümmten Übergangsbereich 232d mit einem Radius RH2 von 2.0 mm schliesst sich dann ein dritter Abschnitt 232e mit einem Hohlschliff von β3=50° an. Dieser erstreckt sich nach innen bis zum Ende des geschärften Abschnitts der Nebenschneide 232. Dieser weist in axialer Richtung eine Tiefe t2 von 1.13 mm hinter der Stirnfläche auf (vgl. Figur 9).

Im Bereich der Neben-Spanfläche 236 weist die Nebenschneidkante einen Rückspanwinkel γ'ρ von -4° auf (siehe Figur 8), der Spanwinkel γ'o beträgt 8° (siehe Figur 11). Im Bereich des Zahnanschliffs 234 weist die Nebenschneidkante 232 einen Rückspanwinkel γ'ρ2 von -28° auf (siehe Figur 8), der Spanwinkel γ'o2 beträgt 13° (siehe Figur 11).

Wie aus der Figur 8 gut ersichtlich ist, weist die Stirnseite zwischen jeweils zwei in Rotationsrichtung benachbarten Nebenschneiden 232 der Schneidzähne 217.1...4 jeweils eine Stirnlücke 241.1, 241.2, 241.3, 241.4 auf. Jede der Stirnlücken 241.1...4 ist muldenförmig ausgebildet, mit einem Öffnungswinkel βS von 55° und einem Stirnlückenradius R4 von 0.5 mm (vgl. Figur 11). Ein hinteres, radial inneres Ende der Mulde stellt eine Fortsetzung eines der Schneidzähne 217.4 dar. Die Mulde erstreckt sich dann mit ihrer Längsrichtung quer zu diesem hinteren Ende radial nach aussen und schliesst mit ihrer in Rotationsrichtung hinteren Seite zunächst an eine zentrale Erhebung 242, dann an die Neben-Spanfläche 236 des in Rotationsrichtung nachfolgenden Schneidzahns 217.1 an. Der tiefste Punkt der Stirnlücke 241.1...4 in einer axialen Ebene, welche die äusseren Enden der Nebenschneiden 232 umfasst, liegt in einer Tiefe t1 von 1.33 mm hinter der Stirnfläche. Die entsprechende Tiefe t4 der zentralen Erhebung 242, entlang der Achse A, beträgt 1.23 mm (vgl. Figur 9).

Die Längsachse der Stirnlücke 241.1...4, entsprechend dem Muldengrund, ist gegenüber einer Radialebene um einen Winkel ψ=22° geneigt, so dass die Mulde ausgehend vom Zentrum des Fräswerkzeugs nach aussen schräg von der Stirnseite weg verläuft. Der Abstand SB der radial äusseren Begrenzungen der zwei einander gegenüberliegenden Stirnlücken 241.1, 241.3 bzw. 241.2, 241.4 beträgt 2.35 mm. Die beiden Stirnlücken 241.1...4 und die zentrale Erhebung 242 nehmen somit mehr als einen Viertel des Werkzeugdurchmessers ein, die beidseitig radial aussen anschliessenden Nebenschneiden 232 die restlichen knapp drei Viertel.

In der Verlängerung der Stirnlücken 241.1...4 liegen Übergangsflächen 251.1...251.4. Diese weisen einen Radius RZ von 0.65 mm auf (vgl. Figur 10), sind also etwas offener als die Stirnlücken 241.1...4. Die Übergangsflächen 251.1...4 sind muldenförmig, ähnlich wie die Stirnlücken 241.1...4, der Boden der Mulde erstreckt sich aber entlang einer konvexen Linie. Der entsprechende Krümmungsradius RS beträgt 0.8 mm (vgl. Figur 9). Die axiale Tiefe LZ des axial hinteren Endes der Übergangsflächen 251.1...4 beträgt 3.9 mm; in einer in der Neben-Spanfläche 236 eines Schneidzahns 217.1...4 liegenden Ebene beträgt der radiale Abstand AZ der entsprechenden Übergangsfläche 251.1...4 vom Werkzeugmantel 1.15 mm (vgl. Figur 11). Die Übergangsflächen 251.1...4 weisen in Richtung der Haupt-Spanfläche 222 eine Verbreiterung 252 auf, die während der Herstellung des Fräswerkzeugs mittels eines seitlichen Versatzes der verwendeten Schleifscheibe hergestellt wurde. Die Übergangsflächen 251.1...4 laufen in axialer Richtung hinten zungenförmig in die Spannut aus.

Mit einer sehr ähnlichen Stirngeometrie lassen sich vierschneidige Schaftfräser mit anderem Nominaldurchmesser d1 fertigen. Als Beispiel sind in der nachfolgenden Tabelle die entsprechenden Parameter für die Durchmesser 4.0, 6.0, 12.0 und 20.0 mm aufgeführt (Längenangaben jeweils in mm):

| **Mass** | **Sym.** | **4.0** | **6.0** | **12.0** | **20.0** |
|---|---|---|---|---|---|
| **Durchmesser** | **d1** | | | | |
| Stirnlücke | βS | 55° | | | |
| Stirnlücke Winkel | y | 22° | | | |
| Stirnlücke Radius | R4 | 0.2 | 0.3 | 0.65 | 1.0 |
| Stirnlücke Tiefe | t1 | 0.66 | 1.0 | 1.99 | 3.32 |
| Stirnlücke Breite | SB | 1.2 | 1.65 | 3.4 | 5.8 |
| Zentrumstiefe | t4 | 0.59 | 0.91 | 1.88 | 3.18 |
| Tiefe Übergangsfläche | LZ | 2.1 | 3.0 | 5.65 | 9.0 |
| Abstand Übergangsfläche | AZ | 0.6 | 0.85 | 1.75 | 2.9 |
| Radius Übergangsfläche | RZ | 0.3 | 0.45 | 0.9 | 1.5 |
| Krümmungsradius | RS | 0.4 | 0.6 | 1.2 | 2.0 |
| Eckradius | rε | 0.1 | 0.1 | 0.2 | 0.2 |
| Hohlschliff 1 | β | 0° | | | |
| Position 1 Hohlschliff | PH1 | 1.76 | 2.64 | 5.28 | 8.80 |
| Radius 1 Hohlschliff | RH1 | 1.0 | 1.5 | 3.0 | 5.0 |
| Hohlschliff 2 | β2 | 10° | | | |
| Position 2 Hohlschliff | PH2 | 1.06 | 1.58 | 3.17 | 5.28 |
| Radius 2 Hohlschliff | RH2 | 1.0 | 1.5 | 3.0 | 5.0 |
| Hohlschliff 3 | β3 | 50° | | | |
| Freiwinkel 1 Nebenschneide | α'o1 | 6° | | | |
| Freiwinkel 2 Nebenschneide | α'o2 | 16° | | | |
| Spanwinkel Nebenschneide | γ'o | 8° | | | |
| Rückspanwinkel Nebenschneide | γ'ρ | -4° | | | |
| Zahnanschliff | Za | 0.15 | 0.15 | 0.25 | 0.25 |
| Abstand Neben-Spanfläche | ZaE | 0.46 | 0.69 | 1.38 | 2.3 |
| Spanwinkel Zahnanschliff | γ'o2 | 13° | | | |
| Rückspanwinkel Zahnanschliff | γ'ρ2 | -35° | -28° | | |
| Schärftiefe | t2 | 0.56 | 0.85 | 1.69 | 2.82 |

Die Geometrie lässt sich auch auf andere Zähnezahlen, insbesondere Z=3 und Z>4, übertragen, wobei generell Strukturen, die sich in Umfangsrichtung erstrecken, mit wachsender Zähnezahl kleiner zu dimensionieren sind.

Die Figur 13 ist eine schematische Seitenansicht einer Stirnlücke 141 und der dazugehörigen Übergangsfläche 151 in die Spannut 121. Sie dient primär der Erklärung gewisser für die Definition der Erfindung verwendeter Grössen.

Die Stirnlücke 141 des dargestellten erfindungsgemässen Fräsers ist mulden- bzw. trogförmig und weist entlang einer geraden Linie e keine Krümmung auf. Senkrecht zur Linie e ist die Stirnlücke 141 konkav gekrümmt.

Die Übergangsfläche 151 erstreckt sich axial von einem axial tiefsten Übergangspunkt P1 zur Stirnlücke 141 zu einem axial tiefsten Übergangspunkt P2 in die Spannut 121. Die axiale Distanz LZ2 zwischen P1 und P2 charakterisiert die axiale Ausdehnung der Übergangsfläche 151. Bei den Übergängen zwischen Stirnlücke 141 und Übergangsfläche 151 bzw. Übergangsfläche 151 und Spannut 122, z. B. an den Übergangspunkten P1, P2 verändert sich ein Neigungswinkel zu einer Radialebene sprunghaft, d. h. es sind Kanten vorhanden.

Für die Definition weiterer Grössen wird die Geodäte g verwendet. Sie verläuft in der Übergangsfläche 151 und verbindet die beiden erwähnten Übergangspunkte P1 und P2. Gemäss gängiger Definition handelt es sich um die kürzeste Verbindungslinie zwischen den beiden Punkten, die in der Fläche verläuft bzw. eine Kurve mit geodätischer Krümmung 0.

Entlang der Geodäte g lässt sich an jedem Punkt ein Krümmungsradius bestimmen. Er entspricht der Normalkrümmung der Kurve am entsprechenden Punkt. Die Übergangsfläche 151 ist (zumindest in einem sehr weiten Bereich) sattelförmig: Die Krümmung entlang der Geodäte g ist konvex, diejenige in einer senkrechten Richtung dazu konkav.

Entlang der Geodäte g lässt sich auch ein mittlerer Winkel bestimmen. Dazu wird an jedem Punkt der Geodäte g ein Winkel zu einer Radialebene bestimmt. Die entsprechenden Winkelwerte werden integriert und mit der Länge der Geodäte g normiert.

Bei den Übergangspunkten P1 und P2 ergeben sich Winkel α1, α2 zwischen Stirnlücke 141 bzw. Spannut 122 (bzw. einer Tangentialebene dazu am Übergangspunkt P1 bzw. P2) und einer Radialebene. Es ist zu beachten, dass diese Winkel in der Regel nicht mit dem Winkel der Geodäte g (die ja in der Übergangsfläche 151 verläuft) in diesen Punkten und der Radialebene übereinstimmen.

Die Geometrie eines erfindungsgemässen Fräsers lässt sich beispielsweise durch die nachstehende Abfolge von Fräsvorgängen erzeugen. Das konkrete Beispiel bezieht sich auf einen Fräser der zweiten Ausführungsform:
1 a. Erzeugung der zum Schneidezahn 217.1 zugehörigen Nut (Drallwinkel 43.5°);
1 b. Erzeugung der zum Schneidezahn 217.2 zugehörigen Nut (Drallwinkel 42.5°);
1 c. Erzeugung der zum Schneidezahn 217.3 zugehörigen Nut (Drallwinkel 43.5°);
1 d. Erzeugung der zum Schneidezahn 217.4 zugehörigen Nut (Drallwinkel 44.5°);
2a. Erzeugung des Zahnrückens zum Schneidezahn 217.1;
2b. Erzeugung des Zahnrückens zum Schneidezahn 217.2;
2c. Erzeugung des Zahnrückens zum Schneidezahn 217.3;
2d. Erzeugung des Zahnrückens zum Schneidezahn 217.4;
3a. Schärfen des Schneidezahns 217.1;
3b. Schärfen des Schneidezahns 217.2;
3c. Schärfen des Schneidezahns 217.3;
3d. Schärfen des Schneidezahns 217.4;
4a. Ausnehmung des vorderen Teils der Spannut 221 zum Schneidezahn 217.1;
4b. Ausnehmung des vorderen Teils der Spannut 221 zum Schneidezahn 217.2;
4c. Ausnehmung des vorderen Teils der Spannut 221 zum Schneidezahn 217.3;
4d. Ausnehmung des vorderen Teils der Spannut 221 zum Schneidezahn 217.4;
5. Herstellen der Stirnlücken 241.1...4, gleichzeitig werden die Neben-Spanflächen 226 erzeugt;
6. Herstellen der Stirn-Tasche (Oberfläche der zentralen Erhebung 242);
7a. Herstellung des Zahnanschliffs 234 zur Nebenschneide 232 des Schneidezahns 217.1;
7b. Herstellung des Zahnanschliffs 234 zur Nebenschneide 232 des Schneidezahns 217.2;
7c. Herstellung des Zahnanschliffs 234 zur Nebenschneide 232 des Schneidezahns 217.3;
7a. Herstellung des Zahnanschliffs 234 zur Nebenschneide 232 des Schneidezahns 217.4;
8a. Herstellen der Übergangsfläche 251.1 (mit seitlichem Versatz 252);
8b. Herstellen der Übergangsfläche 251.2 (mit seitlichem Versatz 252);
8c. Herstellen der Übergangsfläche 251.3 (mit seitlichem Versatz 252);
8d. Herstellen der Übergangsfläche 251.4 (mit seitlichem Versatz 252);
9. Herstellen der Freifläche 2 (Freifläche 233b) zu den Nebenschneiden 232;
10. Herstellen der Freifläche 1 (Freifläche 233a) zu den Nebenschneiden 232.

Die Erfindung ist nicht auf die dargestellten Ausführungsbeispiele beschränkt. So lassen sich insbesondere auch Fräswerkzeuge mit anderer Zähnezahl und kleineren bzw. grösseren Durchmessern nach der erfindungsgemässen Lehre fertigen. Geometrische Details können anders ausgestaltet werden, insbesondere auch, um den Erfordernissen anderer Werkstoffe Rechnung zu tragen.

Ein erfindungsgemässes Werkzeug kann ferner mit einer inneren Kühlmittelzuführung ausgerüstet sein. Eine entsprechende Auslassöffnung kann axial im Zentrum der Stirnfläche angeordnet sein und erfordert keine massgeblichen Anpassungen der Geometrie gegenüber einem Werkzeug ohne Kühlmittelzuführung. Die erfindungsgemässe Geometrie ist gerade in Verbindung mit Werkzeugen mit Kühlmittelzuführung von Vorteil, weil sie eine Steigerung der Materialstärke und generell eine höhere Werkzeugstabilität im Stirnbereich ermöglicht, was die Reduktion aufgrund der Kühlmittelzuführung zumindest teilweise kompensieren kann.

Zusammenfassend ist festzustellen, dass die Erfindung ein Vollfräswerkzeug schafft, welches bei hoher Lebensdauer grosse Eintauchwinkel erlaubt.

## Patentansprüche

1. Vollfräswerkzeug (100) zur rotierenden Materialbearbeitung, umfassend einen länglichen Werkzeugschaft, welcher einen Arbeitsbereich (113) aufweist, in welchem mantelseitig mindestens zwei helikale Hauptschneiden (117.1, 117.2, 117.3, 117.4) mit zugehörigen Haupt-Spanflächen (122) und in Rotationsrichtung vorne anschliessenden Spannuten (121) angeordnet sind, wobei sich die mindestens zwei helikalen Hauptschneiden in eine Stirnseite des Werkzeugschafts fortsetzen und dort mindestens zwei Nebenschneiden (132) mit zugehörigen Neben-Spanflächen (136) bilden, wobei zwischen jeder Neben-Spanfläche und einer Freifläche der in Rotationsrichtung vorangehenden Nebenschneide eine Stirnlücke (141) ausgespart ist, wobei zwischen jeweils zwei in Rotationsrichtung aufeinanderfolgenden Nebenschneiden eine Übergangsfläche (151) J ausgebildet ist, welche mindestens an die Neben-Spanfläche der in Rotationsrichtung nachfolgenden Nebenschneide, die Stirnlücke und die Spannut angrenzt, dadurch gekenzeichnet, dass ein mittlerer Winkel der Übergangsfläche zu einer radialen Ebene, gemessen entlang einer Geodäte (9) zwischen einem axial tiefsten ersten Übergangspunkt (P1) zwischen Stirnlücke und Übergangsfläche und einem axial tiefsten zweiten Übergangspunkt (P2) zwischen Übergangsfläche und Spannut, grösser ist als ein erster Winkel der Stirnlücke zur radialen Ebene am ersten Übergangspunkt und dass der mittlere Winkel der Übergangsfläche kleiner ist als ein zweiter Winkel der Spannut zur radialen Ebene am zweiten Übergangspunkt.

2. Vollfräswerkzeug nach Anspruch 1, **dadurch gekennzeichnet, dass** der erste Winkel 5 - 45° beträgt, dass der mittlere Winkel 40 - 70° beträgt und dass der zweite Winkel mindestens 50° beträgt.

3. Vollfräswerkzeug nach Anspruch 1 oder 2, **dadurch gekennzeichnet, dass** der erste Übergangspunkt Teil einer ersten Übergangskante zwischen Stirnlücke und Übergangsfläche ist.

4. Vollfräswerkzeug nach einem der Ansprüche 1 bis 3, **dadurch gekennzeichnet, dass** der zweite Übergangspunkt Teil einer zweiten Übergangskante zwischen Übergangsfläche und Spannut ist.

5. Vollfräswerkzeug nach einem der Ansprüche 1 bis 4, **dadurch gekennzeichnet, dass** die Stirnlücke entlang einer im Wesentlichen parallel zur nachfolgenden Nebenschneide verlaufenden Richtung keine Krümmung aufweist.

6. Vollfräswerkzeug nach einem der Ansprüche 1 bis 5, **dadurch gekennzeichnet, dass** die Übergangsfläche eine Sattelfläche umfasst.

7. Vollfräswerkzeug nach Anspruch 6, **dadurch gekennzeichnet, dass** ein Krümmungsradius entlang einer Geodäte zwischen einem axial tiefsten ersten Übergangspunkt zwischen Stirnlücke und Übergangsfläche und einem axial tiefsten zweiten Übergangspunkt zwischen Übergangsfläche und Spannut in der Mitte der Geodäte maximal 0.2 d1 beträgt, wobei d1 den Werkzeugdurchmesser bezeichnet.

8. Vollfräswerkzeug nach einem der Ansprüche 1 bis 7, **dadurch gekennzeichnet, dass** eine axiale Distanz zwischen einer Stirnfläche und einem axial tiefsten zweiten Übergangspunkt zwischen Übergangsfläche und Spannut mindestens 0.3 d1 beträgt, wobei d1 den Werkzeugdurchmesser bezeichnet.

9. Vollfräswerkzeug nach einem der Ansprüche 1 bis 8, **dadurch gekennzeichnet, dass** eine axiale Distanz zwischen einem axial tiefsten ersten Übergangspunkt zwischen Stirnlücke und Übergangsfläche und einem axial tiefsten zweiten Übergangspunkt zwischen Übergangsfläche und Spannut mindestens 0.2 d1 beträgt, wobei d1 den Werkzeugdurchmesser bezeichnet.

10. Vollfräswerkzeug nach einem der Ansprüche 1 bis 9, **dadurch gekennzeichnet, dass** die Übergangsfläche spanflächenseitig eine Zusatzausnehmung aufweist.

11. Vollfräswerkzeug nach einem der Ansprüche 1 bis 10, **dadurch gekennzeichnet, dass** ein Übergang der Übergangsfläche in die Spannut zungenförmig ausgebildet ist.

12. Vollfräswerkzeug nach einem der Ansprüche 1 bis 11, **dadurch gekennzeichnet, dass** eine maximale Breite der Übergangsfläche senkrecht zu einer Geodäte zwischen einem axial tiefsten ersten Übergangspunkt zwischen Stirnlücke und Übergangsfläche und einem axial tiefsten zweiten Übergangspunkt zwischen Übergangsfläche und Spannut mindestens ein Viertel, insbesondere mindestens ein Drittel, einer Breite der Spannut im Bereich des zweiten Übergangspunktes beträgt.

13. Verfahren zur Herstellung eines Vollfräswerkzeugs zur rotierenden Materialbearbeitung, das Vollfräswerkzeug umfassend einen länglichen Werkzeugschaft, welcher einen Arbeitsbereich aufweist, in den mantelseitig mindestens zwei helikale Hauptschneiden mit zugehörigen Haupt-Spanflächen und in Rotationsrichtung vorne anschliessenden Spannuten erzeugt werden, wobei sich die mindestens zwei helikalen Hauptschneiden in eine Stirnseite des Werkzeugschafts fortsetzen und dort mindestens zwei Nebenschneiden mit zugehörigen Neben-Spanflächen bilden, wobei zwischen jeder Neben-Spanfläche und einer Freifläche der in Rotationsrichtung vorangehenden Nebenschneide eine Stirnlücke erzeugt wird, **dadurch gekennzeichnet, dass** nach einem Schleifvorgang zur Erzeugung der Stirnlücken ein weiterer Schleifvorgang zur Herstellung einer Übergangsfläche zwischen zwei in Rotationsrichtung aufeinanderfolgenden Nebenschneiden ausgeführt wird, wobei die Übergangsfläche mindestens an die Neben-Spanfläche der in Rotationsrichtung nachfolgenden Nebenschneide, die Stirnlücke und die Spannut angrenzt und ein mittlerer Winkel der Übergangsfläche zu einer radialen Ebene, gemessen entlang einer Geodäte zwischen einem axial tiefsten ersten Übergangspunkt zwischen Stirnlücke und Übergangsfläche und einem axial tiefsten zweiten Übergangspunkt zwischen Übergangsfläche und Spannut, grösser ist als ein erster Winkel der Stirnlücke zur radialen Ebene am ersten Übergangspunkt und dass der mittlere Winkel der Übergangsfläche kleiner ist als ein zweiter Winkel der Spannut zur radialen Ebene am zweiten Übergangspunkt.

## Claims

1. Solid milling tool (100) for rotary material machining, comprising an elongate tool shank which has a working region (113) in which at least two helical main cutting edges (117.1, 117.2, 117.3, 117.4) having associated main rake faces (122) and chip flutes (121) adjoining at the front in the direction of rotation are arranged on the lateral side, wherein the at least two helical main cutting edges continue into an end side of the tool shank and form at least two secondary cutting edges (132) having associated secondary rake faces (136) there, wherein a gash(141) is recessed between each secondary rake face and a flank of the secondary cutting edge preceding in the direction of rotation, wherein a transition face (151) is formed between in each case two secondary cutting edges following each other in the direction of rotation, said transition face being adjacent at least to the secondary rake face of the secondary cutting edge following in the direction of rotation, the gash and the chip flute, **characterized in that** an average angle of the transition face to a radial plane, measured along a geodesic line (g) between an axially lowest first transition point (P1) between the gash and the transition face and an axially lowest second transition point (P2) between the transition face and the chip flute, is greater than a first angle of the gash to the radial plane at the first transition point, and **in that** the average angle of the transition face is smaller than a second angle of the chip flute to the radial plane at the second transition point.

2. Solid milling tool according to Claim 1, **characterized in that** the first angle is 5-45°, **in that** the average angle is 40-70°, and **in that** the second angle is at least 50°.

3. Solid milling tool according to Claim 1 or 2, **characterized in that** the first transition point is part of a first transition edge between the gash and the transition face.

4. Solid milling tool according to one of Claims 1 to 3, **characterized in that** the second transition point is part of a second transition edge between the transition face and the chip flute.

5. Solid milling tool according to one of Claims 1 to 4, **characterized in that** the gash does not have a curvature along a direction running substantially parallel to the following secondary cutting edge.

6. Solid milling tool according to one of Claims 1 to 5, **characterized in that** the transition face comprises a saddle face.

7. Solid milling tool according to Claim 6, **characterized in that** a radius of curvature along a geodesic line between an axially lowest first transition point between gash and transition face and an axially lowest second transition point between transition face and chip flute is at maximum 0.2 d1 in the centre of the geodesic line, wherein d1 denotes the tool diameter.

8. Solid milling tool according to one of Claims 1 to 7, **characterized in that** an axial distance between an end face and an axially lowest second transition point between transition face and chip flute is at least 0.3 d1, wherein d1 denotes the tool diameter.

9. Solid milling tool according to one of Claims 1 to 8, **characterized in that** an axial distance between an axially lowest first transition point between the gash and the transition face and an axially lowest second transition point between transition face and chip flute is at least 0.2 d1, wherein d1 denotes the tool diameter.

10. Solid milling tool according to one of Claims 1 to 9, **characterized in that** the transition face has an additional recess on the rake face side.

11. Solid milling tool according to one of Claims 1 to 10, **characterized in that** a transition of the transition face into the chip flute is of tongue-shaped design.

12. Solid milling tool according to one of Claims 1 to 11, **characterized in that** a maximum width of the transition face perpendicularly to a geodesic line between an axially lowest first transition point between the gash and the transition face and an axially lowest second transition point between the transition face and the chip flute is at least a quarter, in particular at least a third, of a width of the chip flute in the region of the second transition point.

13. Method for producing a solid milling tool for rotary material machining, the solid milling tool comprising an elongate tool shank which has a working region in which at least two helical main cutting edges having associated main rake faces and chip flutes adjoining at the front in the direction of rotation are produced on the lateral side, wherein the at least two helical main cutting edges continue into an end side of the tool shank and form at least two secondary cutting edges having associated secondary rake faces there, wherein a gash is produced between each secondary rake face and a flank of the secondary cutting edge preceding in the direction of rotation, **characterized in that**, after a grinding operation to produce the gash, a further grinding operation is carried out to produce a transition face between two secondary cutting edges following each other in the direction of rotation, wherein the transition face is adjacent at least to the secondary rake face of the secondary cutting edge following in the direction of rotation, the gash and the flute, and an average angle of the transition face to a radial plane, measured along a geodesic line between an axially lowest first transition point between the gash and the transition face and an axially lowest second transition point between the transition face and the chip flute, is greater than a first angle of the gash to the radial plane at the first transition point, and **in that** the average angle of the transition face is smaller than a second angle of the chip flute to the radial plane at the second transition point.

## Revendications

1. Outil de fraisage complet (100) pour l'usinage rotatif de matériaux, comprenant un arbre d'outil allongé qui présente une région de travail (113) dans laquelle sont disposées, du côté de l'enveloppe, au moins deux arêtes de coupe principales hélicoïdales (117.1, 117.2, 117.3, 117.4) avec des surfaces d'enlèvement de copeaux principales associées (122) et des rainures d'enlèvement de copeaux s'y raccordant à l'avant dans la direction de rotation (121), les au moins deux arêtes de coupe principales hélicoïdales se prolongeant par un côté frontal de l'arbre d'outil et y formant au moins deux arêtes de coupe secondaires (132) avec des surfaces d'enlèvement de copeaux secondaires associées (136), un évidement frontal (141) étant évidé entre chaque surface d'enlèvement de copeaux secondaire et une surface libre de l'arête de coupe secondaire précédente dans la direction de rotation, une surface de transition (151) étant réalisée entre à chaque fois deux arêtes de coupe secondaires successives dans la direction de rotation, laquelle est adjacente, au moins au niveau de la surface d'enlèvement de copeaux secondaire de l'arête de coupe secondaire suivante dans la direction de rotation, à l'évidement frontal et à la rainure d'enlèvement de copeaux,
**caractérisé en ce**
**qu'**un angle médian de la surface de transition par rapport à un plan radial, mesuré le long d'une géodésique (g) entre un premier point de transition le plus profond axialement (P1) entre l'évidement frontal et la surface de transition et un deuxième point de transition le plus profond axialement (P2) entre la surface de transition et la rainure d'enlèvement de copeaux, est supérieur à un premier angle de l'évidement frontal par rapport au plan radial au niveau du premier point de transition et **en ce que** l'angle médian de la surface de transition est inférieur à un deuxième angle de la rainure d'enlèvement de copeaux par rapport au plan radial au niveau du deuxième point de transition.

2. Outil de fraisage complet selon la revendication 1, **caractérisé en ce que** le premier angle vaut entre 5 et 45°, **en ce que** l'angle médian vaut entre 40 et 70° et **en ce que** le deuxième angle vaut au moins 50°.

3. Outil de fraisage complet selon la revendication 1 ou 2, **caractérisé en ce que** le premier point de transition fait partie d'une première arête de transition entre l'évidement frontal et la surface de transition.

4. Outil de fraisage complet selon l'une quelconque des revendications 1 à 3, **caractérisé en ce que** le deuxième point de transition fait partie d'une deuxième arête de transition entre la surface de transition et la rainure d'enlèvement de copeaux.

5. Outil de fraisage complet selon l'une quelconque des revendications 1 à 4, **caractérisé en ce que** l'évidement frontal, le long d'une direction s'étendant essentiellement parallèlement à l'arête de coupe secondaire suivante, ne présente pas de courbure.

6. Outil de fraisage complet selon l'une quelconque des revendications 1 à 5, **caractérisé en ce que** la surface de transition comprend une surface de selle.

7. Outil de fraisage complet selon la revendication 6, **caractérisé en ce qu'**un rayon de courbure le long d'une géodésique entre un premier point de transition le plus profond axialement entre l'évidement frontal et la surface de transition et un deuxième point de transition le plus profond axialement entre la surface de transition et la rainure d'enlèvement de copeaux, au milieu de la géodésique, vaut au maximum 0,2 d1, d1 désignant le diamètre de l'outil.

8. Outil de fraisage complet selon l'une quelconque des revendications 1 à 7, **caractérisé en ce qu'**une distance axiale entre une surface frontale et un deuxième point de transition le plus profond axialement entre la surface de transition et la rainure d'enlèvement de copeaux vaut au moins 0,3 d1, d1 désignant le diamètre de l'outil.

9. Outil de fraisage complet selon l'une quelconque des revendications 1 à 8, **caractérisé en ce qu'**une distance axiale entre un premier point de transition le plus profond axialement entre l'évidement frontal et la surface de transition et un deuxième point de transition le plus profond axialement entre la surface de transition et la rainure d'enlèvement de copeaux vaut au moins 0,2 d1, d1 désignant le diamètre de l'outil.

10. Outil de fraisage complet selon l'une quelconque des revendications 1 à 9, **caractérisé en ce que** la surface de transition présente, du côté de la surface d'enlèvement de copeaux, un évidement supplémentaire.

11. Outil de fraisage complet selon l'une quelconque des revendications 1 à 10, **caractérisé en ce qu'**une transition de la surface de transition à la rainure d'enlèvement de copeaux est réalisée en forme de langue.

12. Outil de fraisage complet selon l'une quelconque des revendications 1 à 11, **caractérisé en ce qu'**une largeur maximale de la surface de transition perpendiculairement à une géodésique entre un premier point de transition le plus profond axialement entre l'évidement frontal et la surface de transition et un deuxième point de transition le plus profond axialement entre la surface de transition et la rainure d'enlèvement de copeaux vaut au moins un quart, en particulier au moins un tiers, d'une largeur de la rainure d'enlèvement de copeaux dans la région du deuxième point de transition.

13. Procédé de fabrication d'un outil de fraisage complet pour l'usinage rotatif de matériau, l'outil de fraisage complet comprenant un arbre d'outil allongé qui présente une région de travail dans laquelle sont produites, du côté de l'enveloppe, au moins deux arêtes de coupe principales hélicoïdales avec des surfaces d'enlèvement de copeaux principales associées et des rainures d'enlèvement de copeaux s'y raccordant à l'avant dans la direction de rotation, les au moins deux arêtes de coupe principales hélicoïdales se prolongeant par un côté frontal de l'arbre d'outil et y formant au moins deux arêtes de coupe secondaires avec des surfaces d'enlèvement de copeaux secondaires associées, un évidement frontal étant produit entre chaque surface d'enlèvement de copeaux secondaire et une surface libre de l'arête de coupe secondaire précédente dans la direction de rotation, **caractérisé en ce qu'**après une opération de meulage pour produire les évidements frontaux, une opération de meulage supplémentaire est réalisée pour fabriquer une surface de transition entre deux arêtes de coupe secondaires successives dans la direction de rotation, la surface de transition étant adjacente à l'évidement frontal et à la rainure d'enlèvement de copeaux au moins au niveau de la surface d'enlèvement de copeaux secondaire de l'arête de coupe secondaire suivante dans la direction de rotation, et un angle médian de la surface de transition par rapport à un plan radial, mesuré le long d'une géodésique entre un premier point de transition le plus profond axialement entre l'évidement frontal et la surface de transition et un deuxième point de transition le plus profond axialement entre la surface de transition et la rainure d'enlèvement de copeaux étant supérieur à un premier angle de l'évidement frontal par rapport au plan radial au niveau du premier point de transition et **en ce que** l'angle médian de la surface de transition est inférieur à un deuxième angle de la rainure d'enlèvement de copeaux par rapport au plan radial au niveau du deuxième point de transition.
